(19) Europäisches Patentamt / European Patent Office / Office européen des brevets

(11) **EP 2 846 504 B1**

(12) **EUROPEAN PATENT SPECIFICATION**

(45) Date of publication and mention
of the grant of the patent:
**10.02.2016 Bulletin 2016/06**

(51) Int Cl.:
*H04L 25/02* *(2006.01)*   *H04L 27/26* *(2006.01)*
*H04B 17/00* *(2015.01)*

(21) Application number: **13191732.0**

(22) Date of filing: **06.11.2013**

(54) **Measuring device and measuring method for joint estimation of parameters based upon data symbols**

Messvorrichtung und Messverfahren zur gemeinsamen Schätzung von Parametern auf Grundlage von Datensymbolen

Dispositif et procédé de mesure pour une estimation conjointe de paramètres sur la base de symboles de données

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.09.2013 EP 13182905**

(43) Date of publication of application:
**11.03.2015 Bulletin 2015/11**

(73) Proprietor: **Rohde & Schwarz GmbH & Co. KG 81671 München (DE)**

(72) Inventor: **Weikert, Dr., Oomke 82827 München (DE)**

(74) Representative: **Körfer, Thomas et al Mitscherlich PartmbB Patent- und Rechtsanwälte Sonnenstrasse 33 80331 München (DE)**

(56) References cited:
**WO-A1-2008/051658**

• JUN LI ET AL: "MIMO-OFDM channel estimation in the presence of carrier frequency-offset", EMERGING TECHNOLOGIES: FRONTIERS OF MOBILE AND WIRELESS COMMUNICATION, 2004. PROCEEDINGS OF THE IEEE 6TH CIRCUITS AND SYSTEMS SYMPOSIUM, PISCATAWAY, NJ, USA, IEEE, vol. 2, 31 May 2004 (2004-05-31), pages 685-688, XP010716150, DOI: 10.1109/CASSET.2004.1321980 ISBN: 978-0-7803-7938-1
• WEI LI ET AL: "Implementation and Co-Simulation of Hybrid Pilot-Aided Channel Estimation With Decision Feedback Equalizer for OFDM Systems", IEEE TRANSACTIONS ON BROADCASTING, IEEE SERVICE CENTER, PISCATAWAY, NJ, US, vol. 58, no. 4, 1 December 2012 (2012-12-01), pages 590-602, XP011472239, ISSN: 0018-9316, DOI: 10.1109/TBC.2012.2207249
• JOHN KETCHUM ET AL: "802.11 HT System Description and Operating Principles ; 11-04-0870-00-000n-802-11-ht-system-description-and-operating-principles", IEEE DRAFT; 11-04-0870-00-000N-802-11-HT-SYSTEM-DESCRI PTION-AND-OPERATING-PRINCIPLES, IEEE-SA MENTOR, PISCATAWAY, NJ USA, vol. 802.11n, 13 August 2004 (2004-08-13), pages 1-148, XP017690522, [retrieved on 2004-08-13]

**Description**

The invention relates to a measuring device and a measuring method for measuring a measuring signal. Especially, W-LAN 802.11n and 802.11ac signals are measured.

According to the standards W-LAN 802.11n and 802.11ac, pilot symbols are not transmitted exclusively by one layer or transmit antenna. However, the same pilot symbols are transmitted again after a number of OFDM symbols. Regular measuring devices for measuring W-LAN signals use only pilot symbols as basis for determining the quality of the signals. This leads to a low accuracy.

For example, the German patent application DE 10 2011 077 390 A1 shows a spectrum analyzer for analyzing communication signals. A method and device for determining the channel impulse response of OFDM signals is known from WO 2008/116534 A1.

The document WO 2008/051658 A1 shows a system and method for receiving signals in a communications network. A signal is processed by demodulation means, which perform a first parameter estimation resulting in a demodulated signal. From this demodulated signal, data symbols are decoded. Based upon these data symbols, a channel estimation is performed. The results of the channel estimation are used for more accurately estimating the parameters by the demodulation means.

The document Jun Li et al: "MIMO-OFDM channel estimation in the presence of carrier frequency-offset" in EMGERGING TECHNOLOGIES: FRONTIERS OF MOBILE AND WIRELESS COMMUNICATION, 2004. PROCEEDINGS OF THE IEEE 6TH CIRCUITS AND SYSTEMS SYMPOSIUM, PISCATAWAY, NJ, USA, IEEE, Vol. 2,31 May 2004 (2004-05-31), pages 685-688, ISBN: 978-0-7803-7938-1, also shows a method of for receiving signals in a communications network. Also here, parameters are estimated and the reception is performed based thereupon.

Accordingly, the object of the present invention is to provide a measuring device, a measuring system and a measuring method, which are able to accurately measure a measuring signal.

The object is solved by the features of claim 1 for the measuring device, claim 9 for the measuring system and claim 10 for the measuring method. Dependent claims contain further developments and a computer program product and computer program.

According to an exemplary embodiment of the invention, a measuring device serves the purpose of measuring a measuring signal. The measuring device comprises receiving means for receiving the measuring signal and processing means. The measuring signal comprises known pilot symbols and unknown data symbols. The processing means comprise first iteration means for iteratively determining first parameters of a signal derived from the measuring signal based on the pilot symbols and symbol decision means for determining the data symbols based on the first parameters determined by the first iteration means. Moreover the processing means comprise second iteration means for iteratively determining second parameters of the signal derived from the measuring signal based on the known pilot symbols and the determined data symbols. The first parameters are gain, channel parameters and one or more of carrier frequency offset and/or sample frequency offset and/or phase noise and the second parameters are carrier frequency offset and/or sample frequency offset and/or phase noise and/or gain and/or channel parameters. By using the now known data symbols for calculating the parameters, it is possible to greatly increase measuring accuracy in comparison to only using the known pilot symbols. By iteratively determining all of these parameters in a first loop, only using the known pilot symbols, then detecting the transmitted data symbols and then, in a second loop, determining the parameters using the known pilot symbols and the determined data symbols, a very accurate measuring of the measuring signal is possible.

Advantageously, the first iteration means and/or the second iteration means are set up for determining the first parameters and/or the second parameters using a cost function.

$$L_{l,k} = \left| r_{l,k}(p_R) \right|^2 - 2 \cdot \mathrm{Re}\left\{ r_{l,k}(p_R) \cdot \exp(-\mathrm{j}\,\Phi) \cdot \left( \sum_{\lambda=0}^{L-1} g_l(\lambda) \cdot \widetilde{H}_k(p_R,\lambda) \cdot a_{l,k}(\lambda) \right)^* \right\}$$

$$+ \left| \exp(\mathrm{j}\,\Phi) \cdot \left( \sum_{\lambda=0}^{L-1} g_l(\lambda) \cdot \widetilde{H}_k(p_R,\lambda) \cdot a_{l,k}(\lambda) \right) \right|^2$$

wherein

-   $L_{l,k}$ is the calculated cost at OFDM symbol on subcarrier $k$ at OFDM symbol $l$,

-   $r_{l,k}(p_R)$ is a received symbol in the frequency domain on subcarrier $k$ at OFDM symbol $l$ of receiving antenna $p_R$,

- $g_l(\lambda)$ is the OFDM symbol dependent real gain,

- $\tilde{H}_k(p_R,\lambda)$ are the complex effective channel coefficients between stream $\lambda$ and receive antenna $p_R$, and

- $a_{l,k}(\lambda)$ is in case of the first iteration means the pilot symbol of stream $\lambda$ on subcarrier $k$ at OFDM symbol $l$ and in case of the second iteration means the pilot symbol and/or the data symbol of stream $\lambda$ on subcarrier $k$ at OFDM symbol $l$. A low computational complexity is thereby reached.

It is moreover advantageous, that the first iteration means comprise first parameter estimation means for jointly estimating carrier frequency offset and/or sample frequency offset and/or phase noise based upon initial starting values in a first iteration. Moreover the first iteration means then comprise first gain estimation means for estimating a gain based upon results of the first parameter estimation means and first channel estimation means for estimating channel parameters based upon results of the first parameter estimation means and the first gain estimation means. The first parameter estimation means are then set up for using results of the first gain estimation means and of the first channel estimation means in further iterations. Dependencies between the parameters are therefore no longer a problem. By performing several iterations, an optimum solution can be found independent of dependencies.

Even more advantageously, the second iteration means comprise second parameter estimation means for estimating carrier frequency offset and/or sample frequency offset and/or phase noise based upon the results of the first iteration means and the determined data symbols. Moreover, the second iteration means then comprise second gain estimation means for estimating a gain based upon the results of the second parameter estimation means. Furthermore the second iteration means then comprise second channel estimation means for estimating channel parameters based upon results of the second parameter estimation means and the second gain estimation means. The second parameter estimation means are in this case set up for using results of the second gain estimation means and of the second channel estimation means in further iterations. Thereby, still existing dependencies between the parameters can be resolved. This allows for an even more increased measurement accuracy.

In a further advantageous embodiment, the first parameter estimation means and the second parameter estimation means are set up for jointly estimating the carrier frequency offset and/or sample frequency offset and/or phase noise by deriving a cost function with $\Phi$ and setting its partial derivation to zero resulting in the following equation:

$$\frac{d}{d\,\Phi}L = \sum_k \sum_l \frac{d}{d\,\Phi}L_{l,k} = \sum_k \sum_l 2\cdot\mathrm{Re}\left\{\underbrace{r_{l,k}(p_R)\cdot\left(\sum_{\lambda=0}^{L-1}g_l(\lambda)\cdot\tilde{H}_k(p_R,\lambda)\cdot a_{l,k}(\lambda)\right)^*}_{=F_{l,k}}\cdot j\cdot\exp(-j\,\Phi)\right\} \equiv 0$$

.

It is furthermore advantageous, that the first gain estimation means and the second gain estimation means are set up for determining the gain by deriving a cost function with $g_1(\lambda_i)$ and setting its partial derivation to zero resulting in the following equation:

$$\frac{d}{d\,g_l(\lambda_i)}L = \sum_k \sum_l \frac{d}{d\,g_l(\lambda_i)}L_{l,k}$$

$$= \sum_k \sum_l -2\cdot\mathrm{Re}\left\{r_{l,k}(p_R)\cdot\exp(-j\,\Phi)\cdot\tilde{H}_k^*(p_R,\lambda)\cdot a_{l,k}^{\ *}(\lambda_i)\right\}$$

$$+ \sum_k \sum_l 2\cdot\mathrm{Re}\left\{\left(\sum_{\lambda=0}^{L-1}g_l(\lambda)\cdot\tilde{H}_k(p_R,\lambda)\cdot a_{l,k}(\lambda)\right)\cdot\tilde{H}_k^*(p_R,\lambda)\cdot a_{l,k}^{\ *}(\lambda_i)\right\} \equiv 0$$

.

Moreover, it is advantageous, that the first channel estimation means and the second channel estimation means are set up for determining the channel by deriving a cost function with $\tilde{H}_k(p_R,\lambda_i)$ and setting its partial derivation to zero resulting in the following equation:

$$\frac{d}{d\,\widetilde{H}_k(p_R,\lambda_i)}L = \sum_k \sum_l \frac{d}{d\,\widetilde{H}_k(p_R,\lambda_i)}L_{l,k}$$

$$= \sum_k \sum_l -2\cdot\mathrm{Re}\left\{r_{l,k}(p_R)\cdot\exp(-\mathrm{j}\,\Phi)\cdot g_l^*(\lambda_i)\cdot a_{l,k}^{\ *}(\lambda_i)\right\}$$

$$+ \sum_k \sum_l 2\cdot\mathrm{Re}\left\{\left(\sum_{\lambda=0}^{L-1} g_l(\lambda)\cdot\widetilde{H}_k(p_R,\lambda)\cdot a_{l,k}(\lambda)\right)\cdot g_l^*(\lambda_i)\cdot a_{l,k}^{\ *}(\lambda_i)\right\}\equiv 0 \quad.$$

By setting the derived cost functions to zero, the iterative calculation of the parameters is possible with only a low computational complexity.

In a further advantageous embodiment, the processing means comprise error vector magnitude detecting means for calculating an error vector magnitude of the measuring signal based upon the second parameters of the signal derive from the measuring signal. It is therefore possible to very easily judge the quality of the measuring signal.

An inventive measuring system advantageously comprises a measuring device as described above and coupling means for creating the measuring signal by adding a first signal and a second signal. It is therefore possible to measure, for example, the signal created by a two-antenna-measuring device without any further hardware components.

An inventive measuring method serves the purpose of measuring a measuring signal comprising known pilot symbols and unknown data symbols. Iteratively, first parameters of a signal derived from the measuring signal are determined based on the known pilot symbols. Data symbols are decided based upon the first parameters. Finally, second parameters are determined based upon the first parameters and based upon the determined data symbols. The first parameters are gain, channel parameters and one or more of carrier frequency offset and/or sample frequency offset and/or phase noise and the second parameters are carrier frequency offset and/or sample frequency offset and/or phase noise and/or gain and/or channel parameters.

The carrier frequency offset and/or the sample frequency offset and/or the phase noise of the first parameters are jointly estimated based upon initial starting values in a first iteration, and

the gain of the first parameters is estimated based upon the estimated carrier frequency offset and/or sample frequency offset and/or phase noise, and

the channel parameters of the first parameters are estimated based upon the carrier frequency offset and/or sample frequency offset and/or phase noise and gain, and the carrier frequency offset and/or sample frequency offset and/or phase noise of the first parameters are estimated based upon the estimated gain and channel parameters of the first parameters in further iterations. It is therefore possible to calculate the second parameters very accurately.

An exemplary embodiment of the invention is now further explained by way of example with respect to the drawings, in which

Fig. 1    shows a first exemplary embodiment of the inventive measuring device in a block diagram;

Fig. 2    shows details of the first embodiment of the inventive measuring device in a block diagram;

Fig. 3    shows a first part of an embodiment of the inventive measuring method in a sequence chart, and

Fig. 4    shows a second part of the embodiment of the inventive measuring device in a sequence chart.

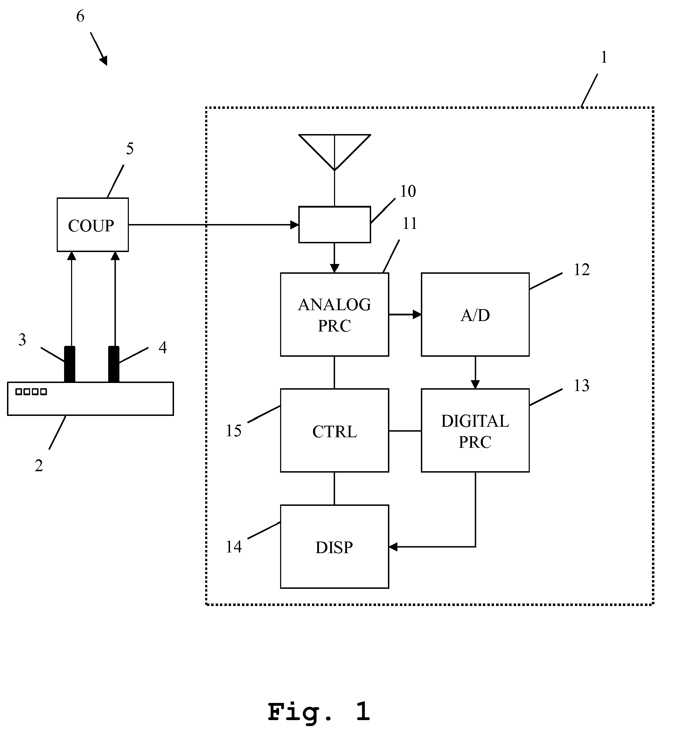

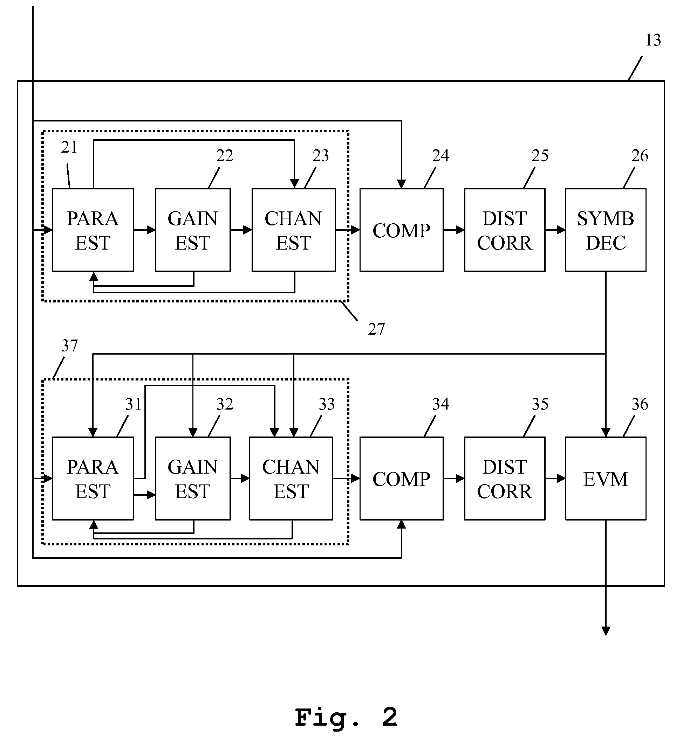

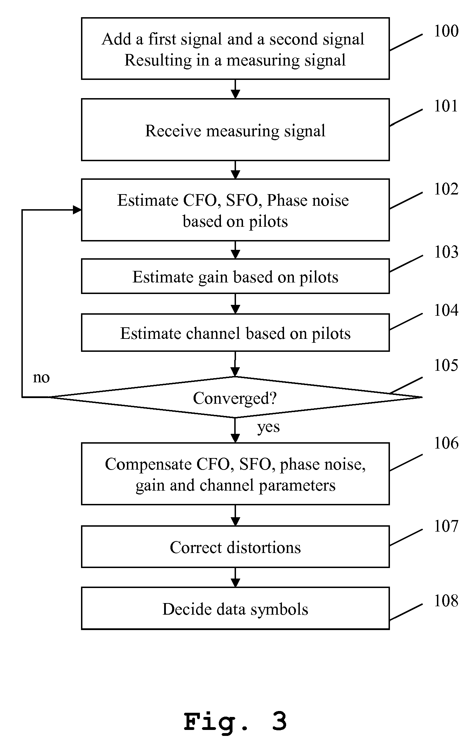

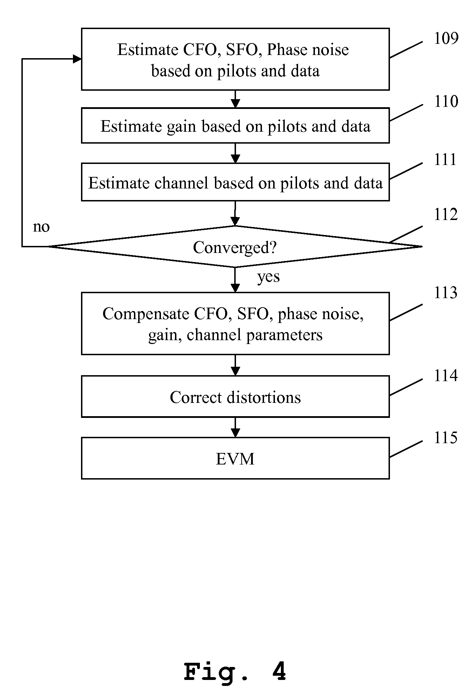

First we demonstrate the underlying problem. As a second step, the general set up and function of an embodiment of the inventive measuring device is described along Fig. 1 and Fig. 2. In a third step, the function of an embodiment of the inventive measuring method is described along Fig. 3 and Fig. 4. Similar entities and reference numbers in different figures have been partially omitted.

The following abbreviations are used in this document:

CFO    Carrier Frequency Offset
CPE    Common Phase Error
EVM    Error Vector Magnitude
MIMO    Multiple In Multiple Out
MISO    Multiple In Single Out
OFDM    Orthogonal Frequency Domain Multiplexing
PRB    Physical Resource Block

SISO    Single In Single Out
SFO     Sample frequency offset
SNR     Signal to noise ratio
SRS     Sounding Reference Symbol
UL      Uplink

When receiving an OFDM signal, after a time to frequency transformation by a FFT of length $N_{\text{FFT}}$, a received symbol $r_{l,k}(p_R)$ in the frequency domain on subcarrier $k$ at OFDM symbol $l$ of each receive antenna $p_R$ can be expressed as

$$r_{l,k}(p_R) = \underbrace{\exp(\text{j}\,2\pi \cdot N_s/N_{\text{FFT}} \cdot \zeta \cdot l \cdot k)}_{\text{SFO}} \cdot \underbrace{\exp(\text{j}\,2\pi \cdot N_s/N_{\text{FFT}} \cdot \Delta f T \cdot l)}_{\text{res. CFO}} \cdot \underbrace{\exp(\text{j} \cdot d\gamma_l)}_{\text{phase noise}}$$

$$\cdot \underbrace{\exp(-\text{j}\,2\pi/N_{\text{FFT}} \cdot D \cdot k)}_{\text{delay}} \cdot \left( \sum_{\lambda=0}^{L-1} g_l(\lambda) \cdot \tilde{H}_k(p_R, \lambda) \cdot a_{l,k}(\lambda) + b_\lambda \right) + n_{l,k}$$

Eq. 1

with

- the relative sampling frequency offset (SFO) $\zeta$,
- the residual carrier frequency offset (CFO) $\Delta f$ in Hz,
- the normalized residual carrier frequency offset (CFO) $\Delta f \cdot T$,
- the OFDM symbol dependent phase noise $d\gamma_l$,
- the OFDM symbol dependent real gain $g_l(\lambda)$,
- the fine timing offset or delay $D$,
- the complex IQ offset $b$,
- the pilot symbol $a_{l,k}(\lambda)$ of stream $\lambda$ on subcarrier $k$ at OFDM symbol $l$,
- the complex effective channel coefficient $\tilde{H}_k(p_R, \lambda)$ between stream $\lambda$ and receive antenna $p_R$,
- the number of streams $L$,
- the number of Nyquist samples $N_s$ within the symbol time $T_s$,
- the useful symbol time $T = T_s - T_g$,
- and the independent Gaussian distributed noise sample $n_{l,k}$.

The delay does not need to be estimated separately and thus is included into the channel transfer function. As the IQ Offset does not affect the pilot subcarriers in 802.11ac, the IQ Offset $b$ is not estimated during joint estimation. The SFO, CFO and phase noise are assumed to be the same for all transmit antennas. This assumption holds as long as only one reference oscillator is used in the UE and all mixers in the UE use the same local oscillator (LO). The gain might be transmit antenna dependent as for each transmit antenna an own amplifier might be used. However the pilots are added into the streams. By applying the MIMO precoding in the transmitter the streams are mixed and on each transmit antenna a mix of different streams is transmitted. Due to that an effective gain per stream is estimated. The channel is different for each subcarrier, while CFO, SFO, phase noise and gain are the same for all subcarriers. CFO, SFO and Channel are assumed to be constant over the duration of a burst. The symbol wise phase noise and symbol wise gain are assumed to be constant over the duration of one OFDM Symbol.

| | Transmit antenna or stream dependency | Subcarrier dependency | Time dependency |
|---|---|---|---|
| CFO | none | none | constant over the duration of a burst |
| SFO | none | none | constant over the duration of a burst |
| Phase noise | none | none | constant over the duration of one OFDM Symbol |
| Gain | Stream dependent | none | constant over the duration of one OFDM Symbol |
| Channel | Stream dependent | Yes | constant over the duration of a burst |

For MIMO channel estimation only the MISO channel estimation needs to be derived and considered. For each receive antenna an independent MISO channel estimation can be performed.

There is one important ambiguity which has to be considered in Eq. 1 when estimating CFO and Phase Noise. The CFO is constant over all OFDM symbols while the phase noise is different for each OFDM symbol. Both are independent from the subcarrier. So the symbol independent CFO can be fully described by the symbol wise phase noise. To get no underdetermined system of equations, at first only the preliminary symbol wise phase noise is estimated assuming the CFO to be zero. Afterwards the preliminary symbol wise phase noise estimate is decomposed into the symbol independent CFO and the correct symbol wise phase noise.

In Fig. 1, an embodiment of the inventive measuring device 1 is shown in a block diagram. A device under test 2, for example a W-LAN-router comprises two antennas 3, 4. The two antennas 3, 4 are connected to a coupler 5, which is connected to the measuring device 1. The measuring device 1 comprises receiving means 10, for example an antenna. The receiving means 10 are connected to analog processing means 11, which are again connected to an analog-digital-converter 12. The analog-digital-converter 12 is connected to digital processing means 13, which again are connected to display means 14. Moreover the measuring device 1 comprises control means 15, which are connected to the analog processing means 11, the digital processing means 13 and the display means 14. The control means 15 are set up for controlling the function of the analog processing means 11, the digital processing means 13 and the display means 14. The coupler 5 and the measuring device 1 form a measuring system 6.

When signals emitted by the device under test 2 are to be measured, the signals emitted by the antennas 3, 4 are combined into a measuring signal by the coupler 5 and transmitted to the receiving means 10. The receiving means 10 receive the measuring signal and transmit it to the analog processing means 11. The analog processing means 11 perform analog processing steps, for example a pre-amplification, a filtering and a transformation into the base band. A resulting still analog signal is handed on to the analog-digital-converter 12, which converts it to a digital measuring signal. The digital measuring signal is passed on to the digital processing means 13 which determines parameters of the measuring signal and hands them on to the display means 14, which display the results of the measurement. Regarding the detailed function of the digital processing means 13, it is referred to Fig. 2. In Fig. 2, the inner workings of the digital processing means 13 of Fig. 1 are shown in a block diagram.

An iterative approach is performed to jointly estimate residual CFO, SFO, phase noise, gains and channel. As channel and CFO are connected in a non-linear fashion, a direct non-iterative solution does not seem to be possible. During each iteration the estimated values change compared to the last iteration. This improvement is an indicator if the iteration has already converged and how accurate the estimated values are. The improvement is calculated. If a predefined number of iterations is reached or if the improvement is smaller than a certain threshold, the iteration is stopped.

The digital processing means 13, comprise first iteration means 27, which comprise first parameter estimation means 21, which are connected with first gain estimation means 22, which are connected to first channel estimation means 23. The first channel estimation means 23 of the first iteration means 27 are connected to first compensation means 24, which are connected to first distortion correction means 25. The first distortion correction means 25 are connected to first symbol deciding means 26, which are connected to second iteration means 37. The second iteration means 37 comprise second parameter estimation means 31, which are connected to second gain estimation means 32, which are connected to second channel estimation means 33. The second channel estimation means 33 of the second iteration means 37 are connected to second compensation means 34, which are connected to second distortion correction means 35. The second distortion correction means 35 are furthermore connected to error vector magnitude detection means 36.

The digital measuring signal is handed to the first parameter estimation means 21 of the first iteration means 27. Iteratively, the first parameter estimation means 21 determines carrier frequency offset, sample frequency offset and phase noise of the pilot symbols present within the digital OFDM signal. Since only the pilot symbols are known, processing can only be performed on these symbols.

An iteration consists of the following estimation steps and the last checking step:

1. Using the starting values or estimated values from a last iteration, the values $F_{l,k}$ are calculated for all OFDM symbols, but only for the pilot subcarriers.

2. The residual CFO, SFO and phase noise are estimated based on the pilot subcarriers.

3. Using the estimated CFO, SFO and phase noise, the values $r_{l,k}(p_R) \cdot \exp(-j\Phi)$ for all OFDM symbols are calculated, but only for the pilot subcarriers.

4. For each OFDM symbol $l$ its gains $g_l(\lambda)$ are estimated according using the estimated channel coefficients from the last iteration or from the preamble in the first iteration.

5. Channel Estimation

    a. If the number of OFDM symbols is equal or higher than the number of streams:

For each subcarrier $k$ its channel coefficients $\tilde{H}_k(p_R,\lambda)$ are estimated according using the estimated gains $g_l(\lambda)$ from last step.

    b. Otherwise no channel estimation based on the pilots can be performed and the preamble based channel estimate is used instead.

6. Stop iteration if a predefined number of iterations is reached or if the improvement is smaller than a certain threshold.

The above shown steps are performed by the first iteration means 27. The first parameter estimation means 21 use initial starting values for determining the CFO, SFO and phase noise.

A good starting point seems to be an ideal device under test (DUT) which has no impairments. Thus the following starting values are chosen:

-    gain $g_l(\lambda) = 1$,

-    the complex effective channel coefficients $\tilde{H}_k(p_R,\lambda)$ are initialized with the preamble based estimated channel coefficients.

The determined initial estimated values are handed on to the first gain estimation means 22, which calculate an absolute gain based upon the results of the first parameter estimation means 21. The resulting gain value and the results of the first parameter estimation means 21 are handed on to the first channel estimation means 23, which determine channel parameters based upon the results of the first parameter estimation means on the first gain estimation means. The resulting channel parameters are handed back to the first parameter estimation means 21. Moreover, also the results of the gain estimation means 22 are handed back to the first parameter estimation means 21. A second iteration is now performed. The first parameter estimation means 21 calculate the carrier frequency offset, sample frequency offset and phase noise based upon the known pilot symbols, the measured pilot symbols within the digital measuring signal and based upon the determined gain and the determined channel parameters.

The first parameter estimation means 21, the first gain estimation means 22 and the first channel estimation means 23 can though be placed in any order within the first iteration means 27. Independent of the order, the iterative process uses and starting values during the first iteration and the results from a previous iteration during further iterations. Especially, the following orders are possible:

1. The first parameter estimation means 21 are set up for jointly estimating carrier frequency offset and/or sample frequency offset and/or phase noise based upon initial starting values in a first iteration. The first gain estimation means 22 are set up for estimating a gain based upon results of the first parameter estimation means 21. The first channel estimation means 23 are set up for estimating channel parameters based upon results of the first parameter estimation means 21 and the first gain estimation means 22. The first parameter estimation means 21 are set up for using results of the first gain estimation means 22 and of the first channel estimation means 23 in further iterations.

2. The first gain estimation means are set up for estimating a gain based upon initial starting values in a first iteration. The first channel estimation means are set up for estimating channel parameters based upon the initial starting values and the results of the first gain estimation means. The first parameter estimation means are set up for jointly estimating carrier frequency offset and/or sample frequency offset and/or phase noise based upon results of the first gain estimation means and results of the first channel estimation means.

3. The first channel estimation means are set up for estimating channel parameters based upon initial starting values. The first parameter estimation means are set up for jointly estimating carrier frequency offset and/or sample frequency offset and/or phase noise based upon results of the first channel estimation means and the initial starting values. The first gain estimation means are set up for estimating a gain based the results of the first channel estimation means and the results of the first parameter estimation means.

4. The first parameter estimation means are set up for jointly estimating carrier frequency offset and/or sample frequency offset and/or phase noise based upon initial starting values in a first iteration. The first channel estimation means are set up for estimating channel parameters based upon the initial starting values and the results of the first parameter estimation means. The first gain estimation means are set up for estimating a gain based upon the results of the first channel estimation means and the results of the first parameter estimation means.

5. The first channel estimation means are set up for estimating channel parameters based upon initial starting values.

The first gain estimation means are set up for estimating a gain based upon results of the first channel estimation means and the initial starting values. The first parameter estimation means are set up for jointly estimating carrier frequency offset and/or sample frequency offset and/or phase noise based upon results of the first gain estimation means and results of the first channel estimation means.

6. The first gain estimation means are set up for estimating a gain based upon initial starting values in a first iteration. The first parameter estimation means are set up for jointly estimating carrier frequency offset and/or sample frequency offset and/or phase noise based upon results of the first gain estimation means and the initial starting values. The first channel estimation means are set up for estimating channel parameters based upon results of the first parameter estimation means and the first gain estimation means.

The first iteration means 27 repeat this iterative process for a pre-specified number of iterations or until a convergence of the iteration is reached. The resulting parameters, the carrier frequency offset, sample frequency offset, phase noise, gain and channel parameters are afterwards handed on to the first compensation means 24, which compensate the digital measuring signal based upon these parameters. A resulting compensated measuring signal is handed on to the first distortion correction means 25, which correct distortions within the signal. A resulting signal is handed on to the symbol deciding means 26, which determines data symbols present within the signal.

These detected data symbols are passed on to the second iteration means 37, which are also supplied with the original digital measuring signal. An iteration consists of the following estimation steps and the last checking step:

1. Using the above starting values or the estimated values from the last iteration, the values $F_{l,k}$ are calculated for all OFDM symbols, for the pilot subcarriers only or for pilot & data subcarriers.
2. The residual CFO, SFO and phase noise are estimated based on the pilot subcarriers only or on pilot & data subcarriers.
3. Using the estimated CFO, SFO and phase noise, the values $r_{l,k}(p_R)\cdot\exp(-j\Phi)$ for all OFDM symbols are calculated, for the pilot subcarriers only or for pilot & data subcarriers.
4. For each OFDM symbol $l$ its gains $g_l(\lambda)$ are estimated using the estimated channel coefficients $\tilde{H}_k(p_R,\lambda)$. The estimation is based on the pilot subcarriers only or on pilot & data subcarriers.
5. Channel Estimation

   a. If a payload based channel estimation may be performed and if the number of OFDM symbols is equal or higher than the number of streams:

   For each subcarrier $k$ its channel coefficients $\tilde{H}_k(p_R,\lambda)$ are estimated using the estimated gains $g_l(\lambda)$ from last step. The estimation is based on pilot and data subcarriers in any case as a channel estimate is required for all subcarriers.

   b. If only a preamble based channel estimation may be performed, no payload based channel estimation is performed. So nothing is done in this step.

6. Stop iteration if a predefined number of iterations is reached or if the improvement is smaller than a certain threshold.

This iterative process is performed by the second iteration means 37. The second parameter estimation means 31 determines carrier frequency offset, sample frequency offset and phase noise based upon the known pilot symbols, the determined data symbols and a set of initial starting values. The set of initial starting values can either be independent from the final parameters of the first iteration means 27. Alternatively, the final parameters of the first iteration means 27 can be used. For example, the gains are initialized with the estimated values from the reference path. If a payload based channel estimation may be performed, the channel coefficients are for example initialized with the estimated values from the reference path. If only a preamble based channel estimation may be performed, the preamble based channel estimate may be used. No payload based channel estimation is performed in this case during the iterations.

The resulting parameters are handed on to the second gain estimation means 32, which determine an absolute gain based upon the parameters determined by the parameter estimation means 31 and based upon the determined data symbols and the known pilot symbols. For reasons of clarity, the lines supplying the original digital measuring signal to the gain estimation means and the channel estimation means are not shown in Fig. 2.

The second gain estimation means 32 hands on the estimated gain value to the second channel estimation means 33. Moreover, the parameters determined by the parameter estimation means 31 are also supplied with to channel estimation means 33. The second channel estimation means 33 determines a channel estimate based upon the known pilot symbols within the original digital measuring signal, the determined data symbols and based upon the parameters determined by the second parameter estimation means 31 and the second gain estimation means 32. The resulting channel estimate is handed back to the second parameter estimation means 31, which in a second iteration determines carrier frequency offset sample frequency offset and phase noise based upon the known pilot symbols, the determined data symbols, the determined gain and the determined channel estimate. The second iteration means 37 also performs a number of iterations in order to finally determine the carrier frequency offset sample frequency offset, phase noise, gain and channel estimate. Either a set number of iterations is performed or continuous iterations are performed until a convergence of the iteration is reached.

As with the first iteration means 27, the order of the function blocks within the second iteration means 37 is not fixed. The second parameter estimation means 31, the second gain estimation means 32 and the second channel estimation means can be arranged in any order, as described in detail regarding the first iteration means 27.

The resulting values are handed on to the second compensation means 34, which compensated the original digital measuring signal using these parameters. A resulting compensated digital signal is handed on to the second distortion correction means 35, which perform a distortion correction of the digital signal. A resulting distortion corrected signal is handed on to the error vector magnitude calculation means 36, which calculates an error vector magnitude based upon the decided symbols, which are provided by the symbol deciding means 26 and based upon the distortion corrected signal. This error vector magnitude is handed on to the display means 14 of Fig. 1 and displayed.

Instead of the error vector magnitude calculating means 36, alternative parameters of the final signal can be determined and displayed. For example, an overall noise level could be used.

In Fig. 3, an exemplary embodiment of the inventive measuring method is shown. Fig. 3 does not show the entire measurement method, but merely a first part. The second part is shown in Fig. 4.

In a first step 100, a measuring signal is created by adding a first signal and a second signal. For example, the two antenna-signals of a W-LAN-device are added to create a measuring signal. In a second step 101 the measuring signal is received. In a third step 102 the initial step of an iterative process is performed. For step 102 fixed initial starting values for gain and channel parameters are used. Carrier frequency offset, sample frequency offset and phase noise are estimated based on known pilots within the received measuring signal.

In a fourth step 103 a gain is estimated based upon the pilots and based upon the estimated CFO, SFO and phase noise. In a fifth step 104, channel parameters are estimated based upon the estimated CFO, SFO, phase noise and gain and based upon the known pilot symbols. In a sixth step 105, it is tested, if the iterative process has already converged in case, this is not the case, the steps 102-105 are repeated.

Alternatively to the convergence test of step 105, it is possible to perform a fixed number of iterations.

After this, the received measuring signal is compensated for carrier frequency offset, sample frequency offset, phase noise, gain and channel parameters. In an eighth step 107, distortions within the resulting compensated measuring signal are corrected. In a ninth step 108 it is decided, which data symbols are present within the resulting distortion corrected measuring signal.

The inventive measuring method is continued in Fig. 4. In a tenth step 109, a second iterative process is started by estimating carrier frequency offset sample frequency offset, phase noise based upon the known pilot symbols and the determined data symbols. For this iteration, final values determined in the previous iterative process of steps 102-104 can be used. Alternatively fixed starting values can be used. In an eleventh step 110, gain is estimated based upon the determined CFO, SFO, phase noise and based upon the pilot symbols and data symbols.

In a twelfth step 111, channel parameters are estimated based upon the CFO, SFO, phase noise gain pilots and data symbols. In a thirteenth step 112 it is tested, if the iterative process of steps 109-111 has already converged. If this is not the case, a further iteration is started by performing step 109 again using the estimated values of the previous iteration. Alternatively to testing convergence, a fixed number of iterations could be performed.

After step 112, CFO, SFO, phase noise gain and channel parameters are compensated within the received measuring signal. In a fifteenth step 114, distortions within this signal are corrected. In a final sixteenth step 115, an error vector magnitude is determined based upon the original digital measuring signal and based upon the distortion corrected measuring signal. Alternatively, other parameters can be detected in the sixteenth step.

In the following a detailed derivation of the joint estimation is shown:

The Eq. 1 is rewritten as neglecting the IQ Offset

$$r_{l,k}(p_R) = \exp(j\,\Phi) \cdot \left( \sum_{\lambda=0}^{L-1} g_l(\lambda) \cdot \widetilde{H}_k(p_R,\lambda) \cdot a_{l,k}(\lambda) \right) + n_{l,k} \qquad \text{Eq. 2}$$

with

$$\Phi = 2\pi \cdot N_s / N_{\mathrm{FFT}} \cdot (\zeta \cdot k + \Delta f T) \cdot l + d\gamma_l \quad .$$

$$\mathrm{Eq.}\ 3$$

For the ML approach the cost function

$$L = \sum_{k} \sum_{l} L_{l,k}$$

$$\mathrm{Eq.}\ 4$$

with

$$L_{l,k} = \left| r_{l,k}(p_R) - \exp(\mathrm{j}\,\Phi) \cdot \left( \sum_{\lambda=0}^{L-1} g_l(\lambda) \cdot \widetilde{H}_k(p_R,\lambda) \cdot a_{l,k}(\lambda) \right) \right|^2$$

$$\mathrm{Eq.}\ 5$$

has to be minimized. The cost function follows to

$$L_{l,k} = \left| r_{l,k}(p_R) \right|^2 - 2 \cdot \mathrm{Re} \left\{ r_{l,k}(p_R) \cdot \left( \exp(\mathrm{j}\,\Phi) \cdot \left( \sum_{\lambda=0}^{L-1} g_l(\lambda) \cdot \widetilde{H}_k(p_R,\lambda) \cdot a_{l,k}(\lambda) \right) \right)^* \right\}$$

$$+ \left| \exp(\mathrm{j}\,\Phi) \cdot \left( \sum_{\lambda=0}^{L-1} g_l(\lambda) \cdot \widetilde{H}_k(p_R,\lambda) \cdot a_{l,k}(\lambda) \right) \right|^2$$

$$\mathrm{Eq.}\ 6$$

and further on to

$$L_{l,k} = \left| r_{l,k}(p_R) \right|^2 - 2 \cdot \mathrm{Re} \left\{ r_{l,k}(p_R) \cdot \exp(-\mathrm{j}\,\Phi) \cdot \left( \sum_{\lambda=0}^{L-1} g_l(\lambda) \cdot \widetilde{H}_k(p_R,\lambda) \cdot a_{l,k}(\lambda) \right)^* \right\}$$

$$+ \left| \exp(\mathrm{j}\,\Phi) \cdot \left( \sum_{\lambda=0}^{L-1} g_l(\lambda) \cdot \widetilde{H}_k(p_R,\lambda) \cdot a_{l,k}(\lambda) \right) \right|^2$$

$$\mathrm{Eq.}\ 7$$

To get an equation to determine $\Phi$, i.e. SFO, CFO and phase noise, the cost function Eq. 7 is derived with respect to $\Phi$

$$\frac{d}{d\,\Phi} L_{l,k} = -2 \cdot \mathrm{Re} \left\{ r_{l,k}(p_R) \cdot (-j) \cdot \exp(-\mathrm{j}\,\Phi) \cdot \left( \sum_{\lambda=0}^{L-1} g_l(\lambda) \cdot \widetilde{H}_k(p_R,\lambda) \cdot a_{l,k}(\lambda) \right)^* \right\}$$

$$\mathrm{Eq.}\ 8$$

and follows to

$$\frac{d}{d\Phi}L_{l,k} = +2 \cdot \mathrm{Re}\left\{ r_{l,k}(p_R) \cdot \left( \sum_{\lambda=0}^{L-1} g_l(\lambda) \cdot \widetilde{H}_k(p_R,\lambda) \cdot a_{l,k}(\lambda) \right)^* \cdot j \cdot \exp(-j\,\Phi) \right\}$$

$$\text{Eq. 9}$$

The derivate is set to zero

$$\frac{d}{d\Phi}L = \sum_k \sum_l \frac{d}{d\Phi}L_{l,k} = \sum_k \sum_l 2 \cdot \mathrm{Re}\left\{ \underbrace{r_{l,k}(p_R) \cdot \left( \sum_{\lambda=0}^{L-1} g_l(\lambda) \cdot \widetilde{H}_k(p_R,\lambda) \cdot a_{l,k}(\lambda) \right)^*}_{= F_{l,k}} \cdot j \cdot \exp(-j\,\Phi) \right\} \equiv 0$$

$$\text{Eq. 10}$$

The expression Eq 10 gets zero if

$$\boxed{\Phi = \arg(F_{l,k}) \quad \forall\, l,k}$$

$$\text{Eq. 11}$$

In this case the expression

$$F_{l,k} \cdot \exp(-j\,\Phi)$$

$$\text{Eq. 12}$$

is real and the expression

$$\frac{d}{d\Phi}L = \sum_k \sum_l \frac{d}{d\Phi}L_{l,k} = \sum_k \sum_l 2 \cdot \mathrm{Re}\left\{ F_{l,k} \cdot j \cdot \exp(-j\,\Phi) \right\} = 0$$

$$\text{Eq. 13}$$

is zero.

The estimation problem Eq. 11 is a highly over determined system of equations and is solved by Vector Matrix Inversion.

For implementation it should be noted, that an unwrap operation has to be performed on $\arg(F_{l,k}(p_R))$ for each OFDM Symbol and maybe additionally in subcarrier direction. This is required to eliminate the discontinuities.

The number of OFDM symbols per burst is denoted as $N_l$. In the reference path only pilot subcarriers may be used, so $N_k$ is the number of pilots subcarriers per OFDM symbol. In case of 802.11n and 20MHz bandwidth there are $N_k = 4$ pilots subcarriers with $k_0 = -21$, $k_1 = -7$, $k_2 = +7$, $k_3 = +21$. In the measurement path a) only the pilot subcarriers with $N_k$ being the number of pilot subcarriers or b) the pilot and data subcarriers with $N_k$ being the number pilot and data subcarriers may be used.

For one receive antenna the estimation problem Eq. 11 can be rewritten in matrix vector notation as follows

$$
\underbrace{\begin{bmatrix}
2\pi \cdot N_s / N_{FFT} \cdot l_0 \cdot k_0 & 2\pi \cdot N_s / N_{FFT} \cdot l_0 \\
\vdots & \vdots \\
2\pi \cdot N_s / N_{FFT} \cdot l_0 \cdot k_{N_k-1} & 2\pi \cdot N_s / N_{FFT} \cdot l_0 \\
2\pi \cdot N_s / N_{FFT} \cdot l_1 \cdot k_0 & 2\pi \cdot N_s / N_{FFT} \cdot l_1 \\
\vdots & \vdots \\
2\pi \cdot N_s / N_{FFT} \cdot l_1 \cdot k_{N_k-1} & 2\pi \cdot N_s / N_{FFT} \cdot l_1 \\
\vdots & \vdots \\
2\pi \cdot N_s / N_{FFT} \cdot l_{N_l-1} \cdot k_{N_k-1} & 2\pi \cdot N_s / N_{FFT} \cdot l_{N_l-1}
\end{bmatrix}}_{=A}
\cdot
\underbrace{\begin{bmatrix} \zeta \\ \Delta f T \end{bmatrix}}_{=x_{CFO,SFO}}
=
\underbrace{\begin{bmatrix}
\arg\left(F_{l_0,k_0}(p_R)\right) \\
\vdots \\
\arg\left(F_{l_0,k_{N_k-1}}(p_R)\right) \\
\arg\left(F_{l_1,k_0}(p_R)\right) \\
\vdots \\
\arg\left(F_{l_1,k_{N_k-1}}(p_R)\right) \\
\vdots \\
\arg\left(F_{l_{N_l-1},k_{N_k-1}}(p_R)\right)
\end{bmatrix}}_{=y(p_R)}
$$

$$\text{Eq. } 14$$

The matrix $A$ and the vector $x_{CFO,SFO}$ are independent from the considered receive antenna $p_R$.

As CFO and SFO are independent from the receive antenna, CFO and SFO are estimated jointly over all receive antennas. Therefore for two receive antennas the estimation problem is written in matrix vector notation as follows

$$
\underbrace{\begin{bmatrix} A \\ A \end{bmatrix}}_{=B} \cdot x_{CFO,SFO} = \underbrace{\begin{bmatrix} y(0) \\ y(1) \end{bmatrix}}_{=y} .
$$

$$\text{Eq. } 15$$

The vector $x_{CFO,SFO}$ contains the unknowns while $A$, $B$ and $y$ are known. The matrices $A$ and $B$ and its Pseudoinverse can be calculated once before the iteration and not in every iteration step.

The solution of Eq. 14 is

$$x_{CFO,SFO} = pinv(A) \cdot y(0)$$

$$\text{Eq. } 16$$

and of Eq. 15 it is

$$x_{CFO,SFO} = pinv(B) \cdot y$$

$$\text{Eq. } 17$$

using the Moore-Penrose Pseudoinverse $pinv(\cdot)$.

For one receive antenna the estimation problem Eq. 11 can be rewritten in matrix vector notation as follows

$$\begin{bmatrix} 2\pi \cdot N_s / N_{FFT} \cdot l_0 \cdot k_0 & 2\pi \cdot N_s / N_{FFT} \cdot l_0 & 1 & 0 & \cdots & 0 \\ \vdots & \vdots & & 1 & 0 & \cdots & 0 \\ 2\pi \cdot N_s / N_{FFT} \cdot l_0 \cdot k_{N_k-1} & 2\pi \cdot N_s / N_{FFT} \cdot l_0 & 1 & 0 & \cdots & 0 \\ 2\pi \cdot N_s / N_{FFT} \cdot l_1 \cdot k_0 & 2\pi \cdot N_s / N_{FFT} \cdot l_1 & 0 & 1 & \cdots & 0 \\ \vdots & \vdots & & 0 & 1 & \cdots & 0 \\ 2\pi \cdot N_s / N_{FFT} \cdot l_1 \cdot k_{N_k-1} & 2\pi \cdot N_s / N_{FFT} \cdot l_1 & 0 & 1 & \cdots & 0 \\ \vdots & \vdots & & \vdots & \vdots & \vdots & \vdots \\ 2\pi \cdot N_s / N_{FFT} \cdot l_{N_l-1} \cdot k_{N_k-1} & 2\pi \cdot N_s / N_{FFT} \cdot l_{N_l-1} & 0 & \cdots & 0 & 1 \end{bmatrix} \cdot \underbrace{\begin{bmatrix} \zeta \\ \Delta f T \\ d\gamma_{l_0}(p_R) \\ d\gamma_{l_1}(p_R) \\ \vdots \\ d\gamma_{l_{N_l-1}}(p_R) \end{bmatrix}}_{=x} = \underbrace{\begin{bmatrix} \arg(F_{l_0,k_0}(p_R)) \\ \vdots \\ \arg(F_{l_0,k_{N_k-1}}(p_R)) \\ \arg(F_{l_1,k_0}(p_R)) \\ \vdots \\ \arg(F_{l_1,k_{N_k-1}}(p_R)) \\ \vdots \\ \arg(F_{l_{N_l-1},k_{N_k-1}}(p_R)) \end{bmatrix}}_{=y(p_R)}$$

$$\text{Eq. } 18$$

Due to the described ambiguity CFO vs. Phase Noise, this equation can not be solved. Instead at first only the preliminary symbol wise phase noise $d\tilde{\gamma}_{l_i}(p_R)$ is estimated assuming the CFO to be zero. Afterwards the preliminary symbol wise phase noise estimate is decomposed into the symbol independent CFO and the correct symbol wise phase noise $d\gamma_{l_i}(p_R)$.

For one receive antenna Eq. 11 is written in short hand notation, assuming the CFO to be zero, as follows

$$\underbrace{\begin{bmatrix} C & D \end{bmatrix}}_{=E} \cdot \underbrace{\begin{bmatrix} \zeta \\ x_{\tilde{\gamma}(0)} \end{bmatrix}}_{=x} = \underbrace{\begin{bmatrix} y(0) \end{bmatrix}}_{=y}$$

$$\text{Eq. } 19$$

with

$$C = \begin{bmatrix} 2\pi \cdot N_s / N_{FFT} \cdot l_0 \cdot k_0 \\ \vdots \\ 2\pi \cdot N_s / N_{FFT} \cdot l_0 \cdot k_{N_k-1} \\ 2\pi \cdot N_s / N_{FFT} \cdot l_1 \cdot k_0 \\ \vdots \\ 2\pi \cdot N_s / N_{FFT} \cdot l_1 \cdot k_{N_k-1} \\ \vdots \\ 2\pi \cdot N_s / N_{FFT} \cdot l_{N_l-1} \cdot k_{N_k-1} \end{bmatrix}, \qquad D = \begin{bmatrix} 1 & 0 & \cdots & 0 \\ 1 & 0 & \cdots & 0 \\ 1 & 0 & \cdots & 0 \\ 0 & 1 & \cdots & 0 \\ 0 & 1 & \cdots & 0 \\ 0 & 1 & \cdots & 0 \\ \vdots & \vdots & \vdots & \vdots \\ 0 & \cdots & 0 & 1 \end{bmatrix},$$

$$x_{\tilde{\gamma}(p_R)} = \begin{bmatrix} d\tilde{\gamma}_{l_0}(p_R) \\ d\tilde{\gamma}_{l_1}(p_R) \\ \vdots \\ d\tilde{\gamma}_{l_{N_l-1}}(p_R) \end{bmatrix}.$$

$$\text{Eq. } 20$$

The matrices $C$ and $D$ and the scalar $\zeta$ (SFO) are independent from the considered receive antenna $p_R$. As CFO and SFO are independent from the receive antenna, CFO and SFO are estimated jointly over all receive antennas. Therefore for two receive antennas the estimation problem is written in matrix vector notation as follows

$$\underbrace{\begin{bmatrix} C & D & 0 \\ C & 0 & D \end{bmatrix}}_{=E} \cdot \underbrace{\begin{bmatrix} \zeta \\ x_{\widetilde{\gamma}(0)} \\ x_{\widetilde{\gamma}(1)} \end{bmatrix}}_{=x} = \underbrace{\begin{bmatrix} y(0) \\ y(1) \end{bmatrix}}_{=y}.$$

$$\text{Eq. 21}$$

The vector $x$ contains the unknowns while $E$ and $y$ are known. The matrices $E$ and its Pseudoinverse can be calculated once before the iteration and not in every iteration step.

The solution of Eq. 19 and Eq. 21 is

$$x = pinv(E) \cdot y$$

$$\text{Eq. 22}$$

using the Moore-Penrose Pseudoinverse $_{pinv}(\cdot)$.

Now the preliminary symbol wise phase noise estimate $d\widetilde{\gamma}_{l_i}(p_R)$ is decomposed into the symbol independent CFO and the correct symbol wise phase noise $d\gamma_{l_i}(p_R)$.

The symbol independent CFO is

$$\Delta fT = \frac{1}{N_l \cdot N_R} \sum_{p_R} \sum_{i=0}^{N_l - 1} \frac{d\widetilde{\gamma}_{l_i}(p_R)}{2\pi \cdot N_s / N_{\text{FFT}} \cdot l_i}$$

$$\text{Eq. 23}$$

The real symbol wise phase noise follows to

$$\begin{bmatrix} d\gamma_{l_0}(p_R) \\ d\gamma_{l_1}(p_R) \\ \vdots \\ d\gamma_{l_{N_l-1}}(p_R) \end{bmatrix} = \begin{bmatrix} d\widetilde{\gamma}_{l_0}(p_R) \\ d\widetilde{\gamma}_{l_1}(p_R) \\ \vdots \\ d\widetilde{\gamma}_{l_{N_l-1}}(p_R) \end{bmatrix} - \begin{bmatrix} 2\pi \cdot N_s / N_{\text{FFT}} \cdot l_0 \\ \vdots \\ 2\pi \cdot N_s / N_{\text{FFT}} \cdot l_0 \\ 2\pi \cdot N_s / N_{\text{FFT}} \cdot l_1 \\ \vdots \\ 2\pi \cdot N_s / N_{\text{FFT}} \cdot l_1 \\ \vdots \\ 2\pi \cdot N_s / N_{\text{FFT}} \cdot l_{N_l-1} \end{bmatrix} \cdot \Delta fT.$$

$$\text{Eq. 24}$$

Determination of the Gain - Derivative with respect to $g_l(\lambda_i)$

To get an equation to determine the gains $g_l(\lambda)$, the cost function Eq. 7 is derived with respect to $g_l(\lambda_i)$

$$\frac{d}{d\,g_l(\lambda_i)}L_{l,k} = -2\cdot\mathrm{Re}\left\{r_{l,k}(p_R)\cdot\exp(-\mathrm{j}\,\Phi)\cdot\widetilde{H}_k^*(p_R,\lambda)\cdot a_{l,k}^{\,*}(\lambda_i)\right\}$$

$$+\,2\cdot\mathrm{Re}\left\{\exp(\mathrm{j}\,\Phi)\cdot\left(\sum_{\lambda=0}^{L-1}g_l(\lambda)\cdot\widetilde{H}_k(p_R,\lambda)\cdot a_{l,k}(\lambda)\right)\cdot\exp(-\mathrm{j}\,\Phi)\cdot\widetilde{H}_k^*(p_R,\lambda)\cdot a_{l,k}^{\,*}(\lambda_i)\right\}$$

$$\mathrm{Eq.\ 25}$$

and follows to

$$\frac{d}{d\,g_l(\lambda_i)}L_{l,k} = -2\cdot\mathrm{Re}\left\{r_{l,k}(p_R)\cdot\exp(-\mathrm{j}\,\Phi)\cdot\widetilde{H}_k^*(p_R,\lambda)\cdot a_{l,k}^{\,*}(\lambda_i)\right\}$$

$$+\,2\cdot\mathrm{Re}\left\{\left(\sum_{\lambda=0}^{L-1}g_l(\lambda)\cdot\widetilde{H}_k(p_R,\lambda)\cdot a_{l,k}(\lambda)\right)\cdot\widetilde{H}_k^*(p_R,\lambda)\cdot a_{l,k}^{\,*}(\lambda_i)\right\}$$

$$\mathrm{Eq.\ 26}$$

The derivate is set to zero

$$\frac{d}{d\,g_l(\lambda_i)}L = \sum_k\sum_l\frac{d}{d\,g_l(\lambda_i)}L_{l,k}$$

$$=\sum_k\sum_l -2\cdot\mathrm{Re}\left\{r_{l,k}(p_R)\cdot\exp(-\mathrm{j}\,\Phi)\cdot\widetilde{H}_k^*(p_R,\lambda)\cdot a_{l,k}^{\,*}(\lambda_i)\right\}$$

$$+\sum_k\sum_l 2\cdot\mathrm{Re}\left\{\left(\sum_{\lambda=0}^{L-1}g_l(\lambda)\cdot\widetilde{H}_k(p_R,\lambda)\cdot a_{l,k}(\lambda)\right)\cdot\widetilde{H}_k^*(p_R,\lambda)\cdot a_{l,k}^{\,*}(\lambda_i)\right\}\equiv 0$$

$$\mathrm{Eq.\ 27}$$

It follows

$$\sum_k\sum_l 2\cdot\mathrm{Re}\left\{r_{l,k}(p_R)\cdot\exp(-\mathrm{j}\,\Phi)\cdot\widetilde{H}_k^*(p_R,\lambda)\cdot\cdot a_{l,k}^{\,*}(\lambda_i)\right\}$$

$$=\sum_k\sum_l 2\cdot\mathrm{Re}\left\{\left(\sum_{\lambda=0}^{L-1}g_l(\lambda)\cdot\widetilde{H}_k(p_R,\lambda)\cdot a_{l,k}(\lambda)\right)\cdot\widetilde{H}_k^*(p_R,\lambda)\cdot a_{l,k}^{\,*}(\lambda_i)\right\}$$

$$\mathrm{Eq.\ 28}$$

As summation and taking the real part can be exchanged, it follows

$$2 \cdot \mathrm{Re}\left\{ \sum_k \sum_l r_{l,k}(p_R) \cdot \exp(-\mathrm{j}\,\Phi) \cdot \tilde{H}_k^*(p_R, \lambda) \cdot a_{l,k}{}^*(\lambda_i) \right\}$$

$$= 2 \cdot \mathrm{Re}\left\{ \sum_k \sum_l \left( \sum_{\lambda=0}^{L-1} g_l(\lambda) \cdot \tilde{H}_k(p_R, \lambda) \cdot a_{l,k}(\lambda) \right) \cdot \tilde{H}_k^*(p_R, \lambda) \cdot a_{l,k}{}^*(\lambda_i) \right\}$$

<div align="right">Eq. 29</div>

Omit to take the real part, it follows

$$\sum_k \sum_l r_{l,k}(p_R) \cdot \exp(-\mathrm{j}\,\Phi) = \sum_k \sum_l \left( \sum_{\lambda=0}^{L-1} g_l(\lambda) \cdot \tilde{H}_k(p_R, \lambda) \cdot a_{l,k}(\lambda) \right).$$

<div align="right">Eq. 30</div>

So for each OFDM symbol $l$ its gains $g_l(\lambda)$ are estimated by solving

$$\sum_k r_{l,k}(p_R) \cdot \exp(-\mathrm{j}\,\Phi) = \sum_k \sum_{\lambda=0}^{L-1} g_l(\lambda) \cdot \tilde{H}_k(p_R, \lambda) \cdot a_{l,k}(\lambda).$$

<div align="right">Eq. 31</div>

For each OFDM symbol $l$ the estimation problem Eq. 31 is rewritten in matrix vector notation as follows

$$\underbrace{\begin{bmatrix} \tilde{H}_{k_0}(p_R,0) \cdot a_{l,k_0}(0) & \cdots & \tilde{H}_{k_0}(p_R,L-1) \cdot a_{l,k_0}(L-1) \\ \vdots & & \vdots \\ \tilde{H}_{k_{N_k-1}}(p_R,0) \cdot a_{l,k_{N_k-1}}(0) & \cdots & \tilde{H}_{k_{N_k-1}}(p_R,L-1) \cdot a_{l,k_{N_k-1}}(L-1) \end{bmatrix}}_{=A} \cdot \underbrace{\begin{bmatrix} g_l(0) \\ \vdots \\ g_l(L-1) \end{bmatrix}}_{x} = \underbrace{\begin{bmatrix} r_{l,k_0}(p_R) \cdot \exp(-\mathrm{j}\,\Phi) \\ \vdots \\ r_{l,k_{N_k-1}}(p_R) \cdot \exp(-\mathrm{j}\,\Phi) \end{bmatrix}}_{=c}.$$

<div align="right">Eq. 32</div>

A solution exists if the number of pilot subcarriers is equal or higher than the number of streams. It should be noted that $\Phi$ depends on $l$ and $k$.

In the reference path only pilot subcarriers may be used, so $N_k$ is the number of pilots subcarriers per OFDM symbol. In the measurement path a) only the pilot subcarriers with $N_k$ being the number of pilot subcarriers or b) the pilot and data subcarriers with $N_k$ being the number pilot and data subcarriers may be used.

The vector $x$ contains the unknowns while $A$ and $C$ are known. The solution of Eq. 32 is

$$x = pinv(A) \cdot c$$

<div align="right">Eq. 33</div>

using the Pseudoinverse $pinv(\cdot)$.

$$\tilde{H}_k(p_R,\lambda_i)$$

To get an equation to determine the channel coefficients $\tilde{H}_k(p_R,\lambda)$, the cost function Eq. 7 is derived with respect to $\tilde{H}_k(p_R,\lambda_i)$

$$\frac{d}{d\,\tilde{H}_k(p_R,\lambda_i)}L_{l,k} = -2\cdot\mathrm{Re}\left\{r_{l,k}(p_R)\cdot\exp(-j\,\Phi)\cdot g_l^*(\lambda_i)\cdot a_{l,k}^{\;*}(\lambda_i)\right\}$$
$$+2\cdot\mathrm{Re}\left\{\exp(j\,\Phi)\cdot\left(\sum_{\lambda=0}^{L-1}g_l(\lambda)\cdot\tilde{H}_k(p_R,\lambda)\cdot a_{l,k}(\lambda)\right)\cdot\exp(-j\,\Phi)\cdot g_l^*(\lambda_i)\cdot a_{l,k}^{\;*}(\lambda_i)\right\}$$

Eq. 34

and follows to

$$\frac{d}{d\,\tilde{H}_k(p_R,\lambda_i)}L_{l,k} = -2\cdot\mathrm{Re}\left\{r_{l,k}(p_R)\cdot\exp(-j\,\Phi)\cdot g_l^*(\lambda_i)\cdot a_{l,k}^{\;*}(\lambda_i)\right\}$$
$$+2\cdot\mathrm{Re}\left\{\left(\sum_{\lambda=0}^{L-1}g_l(\lambda)\cdot\tilde{H}_k(p_R,\lambda)\cdot a_{l,k}(\lambda)\right)\cdot g_l^*(\lambda_i)\cdot a_{l,k}^{\;*}(\lambda_i)\right\}$$

Eq. 35

The derivate is set to zero

$$\frac{d}{d\,\tilde{H}_k(p_R,\lambda_i)}L = \sum_k\sum_l\frac{d}{d\,\tilde{H}_k(p_R,\lambda_i)}L_{l,k}$$
$$=\sum_k\sum_l-2\cdot\mathrm{Re}\left\{r_{l,k}(p_R)\cdot\exp(-j\,\Phi)\cdot g_l^*(\lambda_i)\cdot a_{l,k}^{\;*}(\lambda_i)\right\}$$
$$+\sum_k\sum_l 2\cdot\mathrm{Re}\left\{\left(\sum_{\lambda=0}^{L-1}g_l(\lambda)\cdot\tilde{H}_k(p_R,\lambda)\cdot a_{l,k}(\lambda)\right)\cdot g_l^*(\lambda_i)\cdot a_{l,k}^{\;*}(\lambda_i)\right\}\equiv 0$$

Eq. 36

It follows

$$\sum_k\sum_l 2\cdot\mathrm{Re}\left\{r_{l,k}(p_R)\cdot\exp(-j\,\Phi)\cdot g_l^*(\lambda_i)\cdot a_{l,k}^{\;*}(\lambda_i)\right\}$$
$$=\sum_k\sum_l 2\cdot\mathrm{Re}\left\{\left(\sum_{\lambda=0}^{L-1}g_l(\lambda)\cdot\tilde{H}_k(p_R,\lambda)\cdot a_{l,k}(\lambda)\right)\cdot g_l^*(\lambda_i)\cdot a_{l,k}^{\;*}(\lambda_i)\right\}$$

Eq. 37

As summation and taking the real part can be exchanged, it follows

$$2 \cdot \text{Re}\left\{ \sum_k \sum_l r_{l,k}(p_R) \cdot \exp(-j\,\Phi) \cdot g_l^*(\lambda_i) \cdot a_{l,k}^{\;*}(\lambda_i) \right\}$$

$$= 2 \cdot \text{Re}\left\{ \sum_k \sum_l \left( \sum_{\lambda=0}^{L-1} g_l(\lambda) \cdot \tilde{H}_k(p_R,\lambda) \cdot a_{l,k}(\lambda) \right) \cdot g_l^*(\lambda_i) \cdot a_{l,k}^{\;*}(\lambda_i) \right\}$$

Eq. 38

Omit to take the real part, it follows

$$\sum_k \sum_l r_{l,k}(p_R) \cdot \exp(-j\,\Phi) = \sum_k \sum_l \left( \sum_{\lambda=0}^{L-1} g_l(\lambda) \cdot \tilde{H}_k(p_R,\lambda) \cdot a_{l,k}(\lambda) \right)$$

Eq. 39

So for each subcarrier $k$ its channel coefficients $\tilde{H}_k(p_R,\lambda)$ are estimated by solving

$$\sum_l r_{l,k}(p_R) \cdot \exp(-j\,\Phi) = \sum_l \sum_{\lambda=0}^{L-1} g_l(\lambda) \cdot \tilde{H}_k(p_R,\lambda) \cdot a_{l,k}(\lambda) \quad .$$

Eq. 40

For each subcarrier $k$ the estimation problem Eq. 40 is rewritten in matrix vector notation as follows

$$\underbrace{\begin{bmatrix} g_{l_0}(0) \cdot a_{l_0,k}(0) & \cdots & g_{l_0}(L-1) \cdot a_{l_0,k}(L-1) \\ \vdots & & \vdots \\ g_{l_{N_l}}(0) \cdot a_{l_{N_l},k}(0) & \cdots & g_{l_{N_l}}(L-1) \cdot a_{l_{N_l},k}(L-1) \end{bmatrix}}_{=A} \cdot \underbrace{\begin{bmatrix} \tilde{H}_k(p_R,0) \\ \vdots \\ \tilde{H}_k(p_R,L-1) \end{bmatrix}}_{x} = \underbrace{\begin{bmatrix} r_{l_0,k}(p_R) \cdot \exp(-j\,\Phi) \\ \vdots \\ r_{l_{N_l},k}(p_R) \cdot \exp(-j\,\Phi) \end{bmatrix}}_{=c} \quad .$$

Eq. 41

A solution exists if the number of OFDM symbols is equal or higher than the number of streams. It should be noted that $\Phi$ depends on $l$ and $k$.

In the reference path the channel coefficients $\tilde{H}_k(p_R,\lambda)$ are estimated for the pilot subcarriers only. In the measurement path the channel coefficients are estimated for the pilot and data subcarriers.

The vector $x$ contains the unknowns while $A$ and $c$ are known. The solution of Eq. 41 is

$$x = pinv(A) \cdot c$$

Eq. 42

using the Pseudoinverse $pinv(\cdot)$.

The inventive measurement device and method allow for significant improvements. In the reference path corresponding to the first iteration means, in case of MIMO, the symbol wise gain is estimated per stream and not just one value for all streams. Moreover, the channel estimation is based on the pilot symbols and not on the preamble, if the number of OFDM symbols is equal or higher than the number of streams. Furthermore, all impairments are estimated jointly.

Also, in the measurement path corresponding to the second iteration means, in case of MIMO, the symbol wise gain is estimated per stream and not just one value for all streams. Moreover, the estimation of residual CFO, SFO, phase noise and gains may be based on pilot and data subcarriers and not just on the pilot subcarriers. As the data subcarriers are also taken for estimation a more accurate estimation is performed. Also here, all impairments are estimated jointly.

The invention is not limited to the examples and especially not to the W-LAN 802.11n and 802.11ac standard. The invention can be applied to any OFDM signals using known pilot symbols. Also it is important to note that the order of the function blocks within the iteration means is not limited to the order described above. The parameter estimation means, the gain estimation means and the channel estimation means can be placed in any order. The characteristics of the exemplary embodiments can be used in any combination.

**Claims**

1. Measuring device for measuring a measuring signal, comprising receiving means (10) for receiving the measuring signal and processing means (11, 12, 13), wherein the measuring signal comprises known pilot symbols and unknown data symbols,
   wherein the processing means (11, 12, 13) comprise

   - first iteration means (27) for iteratively determining first parameters of a signal derived from the measuring signal based on the pilot symbols,
   - symbol decision means (26) for determining the data symbols based on the first parameters determined by the first iteration means,

   wherein the processing means (11, 12, 13) further comprise second iteration means (37) for iteratively determining second parameters of the signal derived from the measuring signal based on the known pilot symbols and the determined data symbols,
   **characterized in that**
   the first parameters are gain, channel parameters and one or more of carrier frequency offset and/or sample frequency offset and/or phase noise and the second parameters are carrier frequency offset and/or sample frequency offset and/or phase noise and/or gain and/or channel parameters,
   the first iteration means (27) comprise

   - first parameter estimation means (21) for jointly estimating the carrier frequency offset and/or the sample frequency offset and/or the phase noise based upon initial starting values in a first iteration,
   - first gain estimation means (22) for estimating the gain based upon results of the first parameter estimation means (21), and
   - first channel estimation means (23) for estimating the channel parameters based upon results of the first parameter estimation means (21) and the first gain estimation means (22), and

   wherein the first parameter estimation means (21) are set up for using results of the first gain estimation means (22) and of the first channel estimation means (23) in further iterations.

2. Measuring device according to claim 1,
   **characterized in that**
   the first iteration means (27) and/or the second iteration means (37) are set up for determining the first parameters and/or the second parameters using a cost function

$$L_{l,k} = \left| r_{l,k}(p_R) \right|^2 - 2 \cdot \mathrm{Re} \left\{ r_{l,k}(p_R) \cdot \exp(-\mathrm{j}\,\Phi) \cdot \left( \sum_{\lambda=0}^{N-1} g_l(\lambda) \cdot \tilde{H}_k(p_R,\lambda) \cdot a_{l,k}(\lambda) \right)^* \right\}$$

$$+ \left| \exp(\mathrm{j}\,\Phi) \cdot \left( \sum_{\lambda=0}^{N-1} g_l(\lambda) \cdot \tilde{H}_k(p_R,\lambda) \cdot a_{l,k}(\lambda) \right) \right|^2$$

wherein

- $L_{l,k}$ is the calculated cost function on subcarrier $k$ at OFDM symbol $l$,
- $r_{l,k}(p_R)$ is a received symbol in the frequency domain on subcarrier $k$ at OFDM symbol $l$ of receiving antenna $p_R$,
- $g_l(\lambda)$ is the OFDM symbol dependent real gain,
- $\tilde{H}_k(p_R,\lambda)$ are the complex effective channel coefficients between stream $\lambda$ and receiving antenna $p_R$,
- N is the number of streams,
- $a_{l,k}(\lambda)$ is in case of the first iteration means the pilot symbol of stream $\lambda$ on subcarrier $k$ at OFDM symbol $l$ and in case of the second iteration means the pilot and/or the data symbol of stream $\lambda$ on subcarrier $k$ at OFDM symbol $l$, and
- $\Phi$ is the phase of the measuring signal.

3. Measuring device according to claim 1 or 2,
   **characterized in that**
   the second iteration means (37) comprise

   - second parameter estimation means (31) for jointly estimating carrier frequency offset and/or sample frequency offset and/or phase noise based upon results of the first iteration means (27) and the determined data symbols,
   - second gain estimation means (32) for estimating a gain based upon results of the second parameter estimation (31) means, and
   - second channel estimation means (33) for estimating channel parameters based upon results of the second parameter estimation means (31) and the second gain estimation means (32), and

   wherein the second parameter estimation means (31) are set up for using results of the second gain estimation means (32) and of the second channel estimation means (33) in further iterations.

4. Measuring device according to claim 3,
   **characterized in that**
   that the first parameter estimation means (21) and the second parameter estimation means (31) are set up for jointly estimating the carrier frequency offset and/or sample frequency offset and/or phase noise by deriving a cost function L with phase $\Phi$ and setting its differential of $\Phi$ to zero resulting in the following equation:

$$\frac{d}{d\Phi}L = \sum_k \sum_l \frac{d}{d\Phi}L_{l,k} = \sum_k \sum_l 2 \cdot \mathrm{Re}\left\{ \underbrace{r_{l,k}(p_R) \cdot \left( \sum_{\lambda=0}^{N-1} g_l(\lambda) \cdot \tilde{H}_k(p_R,\lambda) \cdot a_{l,k}(\lambda) \right)^*}_{= F_{l,k}} \cdot \mathrm{j} \cdot \exp(-\mathrm{j}\,\Phi) \right\} \equiv 0$$

wherein

- $L_{l,k}$ is the calculated cost function on subcarrier $k$ at OFDM symbol $l$,
- $r_{l,k}(p_R)$ is a received symbol in the frequency domain on subcarrier $k$ at OFDM symbol $l$ of receiving antenna $p_R$,
- $g_l(\lambda)$ is the OFDM symbol dependent real gain,
- $F_{l,k}$ is equal to the term in the bracket,
- N is the number of streams,

- $\tilde{H}_k(p_R,\lambda)$ are the complex effective channel coefficients between stream $\lambda$ and receiving antenna $p_R$, and
- $a_{l,k}(\lambda)$ is in case of the first iteration means the pilot symbol of stream $\lambda$ on subcarrier $k$ at OFDM symbol $l$ and in case of the second iteration means the pilot and/or the data symbol of stream $\lambda$ on subcarrier $k$ at OFDM symbol $l$.

**5.** Measuring device according to claim 3 or 4, **characterized in that** that the first gain estimation means (22) and the second gain estimation means (32) are set up for determining the gain by deriving a cost function L with $g_l(\lambda_i)$ and setting its differential of $g_l(\lambda_i)$ to zero resulting in the following equation:

$$\frac{d}{d\,g_l(\lambda_i)}L = \sum_k \sum_l \frac{d}{d\,g_l(\lambda_i)}L_{l,k}$$

$$= \sum_k \sum_l -2\cdot\mathrm{Re}\left\{r_{l,k}(p_R)\cdot\exp(-\mathrm{j}\,\Phi)\cdot\tilde{H}_k^*(p_R,\lambda)\cdot a_{l,k}^{\,*}(\lambda_i)\right\}$$

$$+ \sum_k \sum_l 2\cdot\mathrm{Re}\left\{\left(\sum_{\lambda=0}^{N-1}g_l(\lambda)\cdot\tilde{H}_k(p_R,\lambda)\cdot a_{l,k}(\lambda)\right)\cdot\tilde{H}_k^*(p_R,\lambda)\cdot a_{l,k}^{\,*}(\lambda_i)\right\} \equiv 0$$

wherein

- $L_{l,k}$ is the calculated cost function on subcarrier $k$ at OFDM symbol $l$,
- $r_{l,k}(p_R)$ is a received symbol in the frequency domain on subcarrier $k$ at OFDM symbol $l$ of receiving antenna $p_R$,
- $g_l(\lambda)$ is the OFDM symbol dependent real gain,
- N is the number of streams,
- $\tilde{H}_k(p_R,\lambda)$ are the complex effective channel coefficients between stream $\lambda$ and receiving antenna $p_R$,
- $a_{l,k}(\lambda)$ is in case of the first iteration means the pilot symbol of stream $\lambda$, on subcarrier $k$ at OFDM symbol $l$ and in case of the second iteration means the pilot and/or the data symbol of stream $\lambda$ on subcarrier $k$ at OFDM symbol $l$, and
- $\Phi$ is the phase of the measuring signal.

**6.** Measuring device according to any of the claims 3 to 5, **characterized in that** the first channel estimation means (23) and the second channel estimation means (33) are set up for determining the channel parameters deriving a cost function L with $\tilde{H}_k(p_R,\lambda_i)$ and setting its differential of $\tilde{H}_k(p_R,\lambda_i)$ to zero resulting in the following equation:

$$\frac{d}{d\,\tilde{H}_k(p_R,\lambda_i)}L = \sum_k \sum_l \frac{d}{d\,\tilde{H}_k(p_R,\lambda_i)}L_{l,k}$$

$$= \sum_k \sum_l -2\cdot\mathrm{Re}\left\{r_{l,k}(p_R)\cdot\exp(-\mathrm{j}\,\Phi)\cdot g_l^*(\lambda_i)\cdot a_{l,k}^{\,*}(\lambda_i)\right\}$$

$$+ \sum_k \sum_l 2\cdot\mathrm{Re}\left\{\left(\sum_{\lambda=0}^{N-1}g_l(\lambda)\cdot\tilde{H}_k(p_R,\lambda)\cdot a_{l,k}(\lambda)\right)\cdot g_l^*(\lambda_i)\cdot a_{l,k}^{\,*}(\lambda_i)\right\} \equiv 0$$

wherein

- $L_{l,k}$ is the calculated cost function on subcarrier $k$ at OFDM symbol $l$,
- $r_{l,k}(P_R)$ is a received symbol in the frequency domain on subcarrier $k$ at OFDM symbol $l$ of receiving antenna $p_R$,

- $g_l(\lambda)$ is the OFDM symbol dependent real gain,
- N is the number of streams,
- $\tilde{H}_k(p_R,\lambda)$ are the complex effective channel coefficients between stream $\lambda$ and receive antenna $p_R$, and
- $a_{l,k}(\lambda)$ is in case of the first iteration means the pilot symbol of stream $\lambda$ on subcarrier $k$ at OFDM symbol $l$ and in case of the second iteration means the pilot and/or the data symbol of stream $\lambda$ on subcarrier $k$ at OFDM symbol $l$.

7. Measuring device according to any of the claims 1 to 6,
**characterized in that**
the processing means (11, 12, 13) comprise error vector magnitude detection means (36) for calculating an error vector magnitude of the measuring signal based upon the second parameters of the signal derived from the measuring signal.

8. Measuring device according to any of the claims 1 to 7,
**characterized in that**
the measuring signal is comprised of a first signal and of a second signal, which are individual antenna signals of a WLAN 802.11n or 802.11ac OFDM signal, and
simultaneous non-identical pilot symbols are present within the first signal and the second signal.

9. Measuring system comprising a measuring device (1) according to any one of the claims 1 to 8 and coupling means (5) for creating the measuring signal by adding a first signal and a second signal.

10. Measuring method for measuring a measuring signal comprising known pilot symbols and unknown data symbols, wherein first parameters of a signal derived from the measuring signal are derived iteratively based on the pilot symbols,
wherein the data symbols are determined based on the first parameters,
wherein second parameters of the signal derived from the measuring signal are determined based on the known pilot symbols and the determined data symbols,
**characterized in that**
the first parameters are gain, channel parameters and one or more of carrier frequency offset and/or sample frequency offset and/or phase noise and the second parameters are carrier frequency offset and/or sample frequency offset and/or phase noise and/or gain and/or channel parameters,
the carrier frequency offset and/or the sample frequency offset and/or the phase noise of the first parameters are jointly estimated based upon initial starting values in a first iteration, and
the gain of the first parameters is estimated based upon the estimated carrier frequency offset and/or sample frequency offset and/or phase noise, and
the channel parameters of the first parameters are estimated based upon the carrier frequency offset and/or sample frequency offset and/or phase noise and gain, and the carrier frequency offset and/or sample frequency offset and/or phase noise of the first parameters are estimated based upon the estimated gain and channel parameters of the first parameters in further iterations.

11. Measuring method according to claim 10, **characterized in that**
the first parameters and/or the second parameters are determined using a cost function

$$L_{l,k} = \left| r_{l,k}(p_R) \right|^2 - 2 \cdot \mathrm{Re}\left\{ r_{l,k}(p_R) \cdot \exp(-\mathrm{j}\,\Phi) \cdot \left( \sum_{\lambda=0}^{N-1} g_l(\lambda) \cdot \tilde{H}_k(p_R,\lambda) \cdot a_{l,k}(\lambda) \right)^* \right\}$$

$$+ \left| \exp(\mathrm{j}\,\Phi) \cdot \left( \sum_{\lambda=0}^{N-1} g_l(\lambda) \cdot \tilde{H}_k(p_R,\lambda) \cdot a_{l,k}(\lambda) \right) \right|^2$$

wherein

- $L_{l,k}$ is the calculated cost function on subcarrier $k$ at OFDM symbol $l$,

- $r_{l,k}(p_R)$ is a received symbol in the frequency domain on subcarrier $k$ at OFDM symbol $l$ of receiving antenna $p_R$,
- $g_l(\lambda)$ is the OFDM symbol dependent real gain,
- $\tilde{H}_k(p_R,\lambda)$ are the complex effective channel coefficients between stream $\lambda$ and receiving antenna $p_R$,
- N is the number of streams,
- $a_{l,k}(\lambda)$ is in case of the first iteration means the pilot symbol of stream $\lambda$ on subcarrier $k$ at OFDM symbol $l$ and in case of the second iteration means the pilot and/or the data symbol of stream $\lambda$ on subcarrier $k$ at OFDM symbol $l$, and
- $\Phi$ is the phase of the measuring signal.

**12.** Measuring method according to claim 10 or 11,
**characterized in that**
carrier frequency offset and/or sample frequency offset and/or phase noise of the second parameters are jointly estimated based upon the frequency offset and/or sample frequency offset and/or phase noise and/or gain and/or channel parameters of the estimated first parameters and the determined data symbols, and/or
a gain of the second parameters is estimated based upon the frequency offset and/or sample frequency offset and/or phase noise of the second parameters, and/or
channel parameters of the second parameters are estimated based upon frequency offset and/or sample frequency offset and/or phase noise and/or gain of the second parameters, and/or
the carrier frequency offset and/or sample frequency offset and/or phase noise of the second parameters are estimated based upon the estimated gain and/or channel parameters of the second parameters in further iterations.

**13.** Measuring method according to claim 12,
**characterized in that**
the channel frequency offset and/or sample frequency offset and/or phase noise are determined by deriving a cost function L with phase $\Phi$ and setting its differential to zero resulting in the following equation:

$$\frac{d}{d\Phi}L = \sum_k \sum_l \frac{d}{d\Phi}L_{l,k} = \sum_k \sum_l 2 \cdot \mathrm{Re}\left\{\underbrace{r_{l,k}(p_R) \cdot \left(\sum_{\lambda=0}^{N-1} g_l(\lambda) \cdot \tilde{H}_k(p_R,\lambda) \cdot a_{l,k}(\lambda)\right)^{*}}_{= F_{l,k}} \cdot j \cdot \exp(-j\,\Phi)\right\} \equiv 0$$

wherein

- $L_{l,k}$ is the calculated cost function on subcarrier $k$ at OFDM symbol $l$,
- $r_{l,k}(p_R)$ is a received symbol in the frequency domain on subcarrier $k$ at OFDM symbol $l$ of receiving antenna $p_R$,
- $g_l(\lambda)$ is the OFDM symbol dependent real gain,
- $F_{l,k}$ is equal to the term in the bracket,
- N is the number of streams,
- $\tilde{H}_k(p_R,\lambda)$ are the complex effective channel coefficients between stream $\lambda$ and receive antenna $p_R$, and
- $a_{l,k}(\lambda)$ is in case of the first iteration means the pilot symbol of stream $\lambda$ on subcarrier $k$ at OFDM symbol $l$ and in case of the second iteration means the pilot and/or the data symbol of stream $\lambda$ on subcarrier $k$ at OFDM symbol $l$.

**14.** Measuring method according to claim 12 or 13,
**characterized in that**
the gain is determined by deriving a cost function L with $g_1(\lambda_i)$ and setting it to zero resulting in the following equation:

$$\frac{d}{d\,g_l(\lambda_i)}L = \sum_k \sum_l \frac{d}{d\,g_l(\lambda_i)}L_{l,k}$$

$$= \sum_k \sum_l -2\cdot\mathrm{Re}\left\{r_{l,k}(p_R)\cdot\exp(-\mathrm{j}\,\Phi)\cdot\tilde{H}_k^*(p_R,\lambda)\cdot a_{l,k}^{\;*}(\lambda_i)\right\}$$

$$+\sum_k \sum_l 2\cdot\mathrm{Re}\left\{\left(\sum_{\lambda=0}^{N-1}g_l(\lambda)\cdot\tilde{H}_k(p_R,\lambda)\cdot a_{l,k}(\lambda)\right)\cdot\tilde{H}_k^*(p_R,\lambda)\cdot a_{l,k}^{\;*}(\lambda_i)\right\}\equiv 0$$

wherein

- $L_{l,k}$ is the calculated cost function on subcarrier $k$ at OFDM symbol $l$,
- $r_{l,k}(p_R)$ is a received symbol in the frequency domain on subcarrier $k$ at OFDM symbol $l$ of receiving antenna $p_R$,
- $g_l(\lambda)$ is the OFDM symbol dependent real gain,
- N is the number of streams,
- $\tilde{H}_k(p_R,\lambda)$ are the complex effective channel coefficients between stream $\lambda$ and receive antenna $p_R$,
- $a_{l,k}(\lambda)$ is in case of the first iteration means the pilot symbol of stream $\lambda$ on subcarrier $k$ at OFDM symbol $l$ and in case of the second iteration means the pilot and/or the data symbol of stream $\lambda$ on subcarrier $k$ at OFDM symbol $l$, and
- $\Phi$ is the phase of the measuring signal.

**15.** Measuring method according to any of the claims 12 to 14,
**characterized in that**
channel parameters are determined by deriving a cost function with $\tilde{H}_k(p_R,\lambda_i)$ and setting it to zero resulting in the following equation:

$$\frac{d}{d\,\tilde{H}_k(p_R,\lambda_i)}L = \sum_k \sum_l \frac{d}{d\,\tilde{H}_k(p_R,\lambda_i)}L_{l,k}$$

$$= \sum_k \sum_l -2\cdot\mathrm{Re}\left\{r_{l,k}(p_R)\cdot\exp(-\mathrm{j}\,\Phi)\cdot g_l^*(\lambda_i)\cdot a_{l,k}^{\;*}(\lambda_i)\right\}$$

$$+\sum_k \sum_l 2\cdot\mathrm{Re}\left\{\left(\sum_{\lambda=0}^{N-1}g_l(\lambda)\cdot\tilde{H}_k(p_R,\lambda)\cdot a_{l,k}(\lambda)\right)\cdot g_l^*(\lambda_i)\cdot a_{l,k}^{\;*}(\lambda_i)\right\}\equiv 0$$

wherein

- $L_{l,k}$ is the calculated cost function on subcarrier $k$ at OFDM symbol $l$,
- $r_{l,k}(p_R)$ is a received symbol in the frequency domain on subcarrier $k$ at OFDM symbol $l$ of receiving antenna $p_R$,
- $g_l(\lambda)$ is the OFDM symbol dependent real gain,
- $\tilde{H}_k(p_R,\lambda)$ are the complex effective channel coefficients between stream $\lambda$ and receive antenna $p_R$, and
- $a_{l,k}(\lambda)$ is in case of the first iteration means the pilot symbol of stream $\lambda$ on subcarrier $k$ at OFDM symbol $l$ and in case of the second iteration means the pilot and/or the data symbol of stream $\lambda$ on subcarrier $k$ at OFDM symbol $l$, and
- $\Phi$ is the phase of the measuring signal.

**16.** Measuring method according to any of the claims 10 to 15,
**characterized in that**

an error vector magnitude of the measuring signal is calculated based upon the second parameters.

17. Measuring method according to any of the claims 10 to 16,
**characterized in that**
the measuring signal is comprised of a first signal and of a second signal, which are individual antenna signals of a WLAN 802.11n or 802.11ac OFDM signal, and
simultaneous non-identical pilot symbols are present within the first signal and the second signal.

18. A computer program with program code means for performing all steps according to any of the claims 10 to 17 if the program is executed on a computer or a digital signal processor.

19. A computer program product having a computer readable medium with stored program code means for performing all steps according to any of the claims 10 to 17 if the program is executed on a computer or a digital signal processor.

**Patentansprüche**

1. Messvorrichtung zum Messen eines Messsignals, umfassend eine Empfangseinrichtung (10) zum Empfangen des Messsignals und eine Verarbeitungseinrichtung (11, 12, 13),
wobei das Messsignal bekannte Pilotsymbole und unbekannte Datensymbole umfasst,
wobei die Verarbeitungseinrichtung (11, 12, 13) umfasst:

- eine erste Iterationseinrichtung (27) zum iterativen Bestimmen von ersten Parametern eines Signals, welches auf der Grundlage der Pilotsymbole aus dem Messsignal abgeleitet ist,
- eine Symbol-Entscheidungseinrichtung (26) zum Bestimmen der Datensymbole auf der Grundlage der durch die erste Iterationseinrichtung bestimmten ersten Parameter,
- wobei die Verarbeitungseinrichtung (11, 12, 13) ferner eine zweite Iterationseinrichtung (37) zum iterativen Bestimmen von zweiten Parametern des aus dem Messsignal abgeleiteten Signals auf der Grundlage der bekannten Pilotsymbole und der bestimmten Datensymbole umfasst,

**dadurch gekennzeichnet,**
**dass** die ersten Parameter die Verstärkung, Kanalparameter und eine oder mehrere des Trägerfrequenzversatzes und/oder des Abtastfrequenzversatzes und/oder des Phasenrauschens sind,
**dass** die zweiten Parameter der Trägerfrequenzversatz und/oder der Abtastfrequenzversatz und/oder das Phasenrauschen und/oder die Verstärkung und/oder Kanalparameter sind,
**dass** die erste Iterationseinrichtung (27) umfasst:

- eine erste Parameter-Schätzeinrichtung (21) zum gemeinsamen Schätzen des Trägerfrequenzversatzes und/oder des Abtastfrequenzversatzes und/oder des Phasenrauschens auf der Grundlage von anfänglichen Startwerten in einer ersten Iteration,
- eine erste Verstärkungs-Schätzeinrichtung (22) zum Schätzen der Verstärkung auf der Grundlage von Ergebnissen der ersten Parameter-Schätzeinrichtung (21)
- und eine erste Kanal-Schätzeinrichtung (23) zum Schätzen der Kanalparameter auf der Grundlage der Ergebnisse der ersten Parameter-Schätzeinrichtung (21) und der ersten Verstärkungs-Schätzeinrichtung (22),

und wobei die erste Parameter-Schätzeinrichtung (21) zur Verwendung der Ergebnisse der ersten Verstärkungs-Schätzeinrichtung (22) und der ersten Kanal-Schätzeinrichtung (23) in weitere Iterationen eingerichtet ist.

2. Messvorrichtung nach Anspruch 1,
**dadurch gekennzeichnet,**
**dass** die erste Iterationseinrichtung (27) und/oder die zweite Iterationseinrichtung (37) zum Bestimmen der ersten Parameter und/oder der zweiten Parameter unter Heranziehung einer Kosten-Funktion

$$L_{l,k} = \left| r_{l,k}(p_R) \right|^2 - 2 \cdot \mathrm{Re}\left\{ r_{l,k}(p_R) \cdot \exp(-\mathrm{j}\,\Phi) \cdot \left( \sum_{\lambda=0}^{N-1} g_l(\lambda) \cdot \tilde{H}_k(p_R, \lambda) \cdot a_{l,k}(\lambda) \right)^{\!\!*} \right\}$$

$$+ \left| \exp(\mathrm{j}\,\Phi) \cdot \left( \sum_{\lambda=0}^{N-1} g_l(\lambda) \cdot \tilde{H}_k(p_R, \lambda) \cdot a_{l,k}(\lambda) \right) \right|^2$$

eingerichtet sind, worin

- $L_{l,k}$ die berechnete Kosten-Funktion auf einem Hilfsträger k bei einem OFDM-Symbol l ist,
- $r_{l,k}(p_R)$ ein empfangenes Symbol in der Frequenzebene auf dem Hilfsträger k bei dem OFDM-Symbol l von der Empfangsantenne $p_R$ ist,
- $g_l(\lambda)$ die OFDM-symbolabhängige reelle Verstärkung ist,
- $\tilde{H}_k(P_R,\lambda)$ die komplexen effektiven Kanalkoeffizienten zwischen dem Strom $\lambda$ und der Empfangsantenne $P_R$ sind,
- N die Anzahl von Strömen ist,
- $\alpha_{l,k}(\lambda)$ im Falle der ersten Iterationseinrichtung das Pilotsymbol des Stromes $\lambda$ auf dem Hilfsträger k bei dem OFDM-Symbol l und im Falle der zweiten Iterationseinrichtung das Pilot- und/oder das Datensymbol des Stromes $\lambda$ auf dem Hilfsträger k bei dem OFDM-Symbol l ist, und
- $\Phi$ die Phase des Messsignals ist.

3. Messvorrichtung nach Anspruch 1 oder 2,
   **dadurch gekennzeichnet,**
   **dass** die zweite Iterationseinrichtung (37) umfasst:

   - eine zweite Parameter-Schätzeinrichtung (31) zum gemeinsamen Schätzen des Trägerfrequenzversatzes und/oder des Abtastfrequenzversatzes und/oder des Phasenrauschens auf der Grundlage von Ergebnissen der ersten Iterationseinrichtung (27) und der bestimmten Datensymbole,
   - eine zweite Verstärkungs-Schätzeinrichtung (32) zum Schätzen einer Verstärkung auf der Grundlage der Ergebnisse der zweiten Parameter-Schätzeinrichtung (31)
   - und eine zweite Kanalschätzeinrichtung (33) zum Schätzen von Kanalparametern auf der Grundlage der Ergebnisse der zweiten Parameter-Schätzeinrichtung (31) und der zweiten Verstärkungs-Schätzeinrichtung (32)

   und wobei die zweite Parameter-Schätzeinrichtung (31) zur Verwendung der Ergebnisse der zweiten Verstärkungs-Schätzeinrichtung (32) und der zweiten Kanal-Schätzeinrichtung (33) in weiteren Iterationen eingerichtet ist.

4. Messvorrichtung nach Anspruch 3,
   **dadurch gekennzeichnet,**
   **dass** die erste Parameter-Schätzeinrichtung (21) und die zweite Parameter-Schätzeinrichtung (31) zum gemeinsamen Schätzen des Trägerfrequenzversatzes und/oder des Abtastfrequenzversatzes und/oder des Phasenrauschens eingerichtet sind, indem eine Kosten-Funktion L mit einer Phase $\Phi$ abgeleitet wird und deren Differential von $\Phi$ auf Null gesetzt wird, was zu folgender Gleichung führt:

$$\frac{d}{d\,\Phi} L = \sum_k \sum_l \frac{d}{d\,\Phi} L_{l,k} = \sum_k \sum_l 2 \cdot \mathrm{Re}\left\{ \underbrace{ r_{l,k}(p_R) \cdot \left( \sum_{\lambda=0}^{N-1} g_l(\lambda) \cdot \tilde{H}_k(p_R, \lambda) \cdot a_{l,k}(\lambda) \right)^{\!\!*} \cdot \mathrm{j} \cdot \exp(-\mathrm{j}\,\Phi) }_{=\,F_{l,k}} \right\} \equiv 0$$

worin

- $L_{l,k}$ die berechnete Kosten-Funktion auf einem Hilfsträger k bei einem OFDM-Symbol l ist,

- $r_{l,k}(p_R)$ ein empfangenes Symbol in der Frequenzebene auf dem Hilfsträger k bei dem OFDM-Symbol l von der Empfangsantenne $p_R$ ist,
- $g_l(\lambda)$ die OFDM-symbolabhängige reelle Verstärkung ist,
- $F_{l,k}$ gleich dem Term in der Klammer ist,
- N die Anzahl von Strömen ist,
- $\tilde{H}_k(P_R,\lambda)$ die komplexen effektiven Kanalkoeffizienten zwischen dem Strom $\lambda$ und der Empfangsantenne $P_R$ sind und
- $\alpha_{l,k}(\lambda)$ im Falle der ersten Iterationseinrichtung das Pilotsymbol des Stromes $\lambda$ auf dem Hilfsträger k bei dem OFDM-Symbol l und im Falle der zweiten Iterationseinrichtung das Pilot- und/oder das Datensymbol des Stromes $\lambda$ auf dem Hilfsträger k bei dem OFDM-Symbol l ist.

5. Messvorrichtung nach Anspruch 3 oder 4,
   **dadurch gekennzeichnet,**
   **dass** die erste Verstärkungs-Schätzeinrichtung (22) und die zweite Verstärkungs-Schätzeinrichtung (32) zum Bestimmen der Verstärkung eingerichtet sind, indem eine Kosten-Funktion L mit $g_l(\lambda_i)$ abgeleitet wird und deren Differential von $g_l(\lambda_i)$ auf Null gesetzt wird, was zu der folgenden Gleichung führt:

$$\frac{d}{d\,g_l(\lambda_i)}L = \sum_k \sum_l \frac{d}{d\,g_l(\lambda_i)}L_{l,k}$$

$$= \sum_k \sum_l -2 \cdot \mathrm{Re}\left\{r_{l,k}(p_R) \cdot \exp(-j\,\Phi) \cdot \tilde{H}_k^\bullet(p_R,\lambda) \cdot a_{l,k}^\bullet(\lambda_i)\right\}$$

$$+ \sum_k \sum_l 2 \cdot \mathrm{Re}\left\{\left(\sum_{\lambda=0}^{N-1} g_l(\lambda) \cdot \tilde{H}_k(p_R,\lambda) \cdot a_{l,k}(\lambda)\right) \cdot \tilde{H}_k^\bullet(p_R,\lambda) \cdot a_{l,k}^\bullet(\lambda_i)\right\} \equiv 0$$

,

worin

- $L_{l,k}$ die berechnete Kosten-Funktion auf einem Hilfsträger k bei einem OFDM-Symbol l ist,
- $r_{l,k}(p_R)$ ein empfangenes Symbol in der Frequenzebene auf dem Hilfsträger k bei dem OFDM-Symbol l von der Empfangsantenne $p_R$ ist,
- $g_l(\lambda)$ die OFDM-symbolabhängige reelle Verstärkung ist,
- N die Anzahl von Strömen ist,
- $\tilde{H}_k(P_R,\lambda)$ die komplexen effektiven Kanalkoeffizienten zwischen dem Strom $\lambda$ und der Empfangsantenne $P_R$ sind und
- $\alpha_{l,k}(\lambda)$ im Falle der ersten Iterationseinrichtung das Pilotsymbol des Stromes $\lambda$ auf dem Hilfsträger k bei dem OFDM-Symbol l und im Falle der zweiten Iterationseinrichtung das Pilot- und/oder das Datensymbol des Stromes $\lambda$ auf dem Hilfsträger k bei dem OFDM-Symbol l ist und
- $\Phi$ die Phase des Messsignals ist.

6. Messvorrichtung nach einem der Ansprüche 3 bis 5,
   **dadurch gekennzeichnet,**
   **dass** die erste Kanal-Schätzeinrichtung (23) und die zweite Kanal-Schätzeinrichtung (33) zum Bestimmen der Kanalparameter eingerichtet sind, indem eine Kosten-Funktion L mit $\tilde{H}_k(P_R,\lambda_l)$ eingerichtet wird und deren Differential von $\tilde{H}_k(P_R,\lambda_l)$ auf Null gesetzt wird, was zu der folgenden Gleichung führt:

$$\frac{d}{d\,\tilde{H}_k(p_R,\lambda_i)}L = \sum_k \sum_l \frac{d}{d\,\tilde{H}_k(p_R,\lambda_i)}L_{l,k}$$

$$= \sum_k \sum_l -2 \cdot \mathrm{Re}\left\{r_{l,k}(p_R) \cdot \exp(-\mathrm{j}\,\Phi) \cdot g_l^{\cdot}(\lambda_i) \cdot a_{l,k}^{\cdot \ast}(\lambda_i)\right\}$$

$$+ \sum_k \sum_l 2 \cdot \mathrm{Re}\left\{\left(\sum_{\lambda=0}^{N-1}g_l(\lambda) \cdot \tilde{H}_k(p_R,\lambda) \cdot a_{l,k}(\lambda)\right) \cdot g_l^{\cdot}(\lambda_i) \cdot a_{l,k}^{\cdot \ast}(\lambda_i)\right\} \equiv 0$$

,

worin

- $L_{l,k}$ die berechnete Kosten-Funktion auf einem Hilfsträger k bei einem OFDM-Symbol l ist,
- $r_{l,k}(p_R)$ ein empfangenes Symbol in der Frequenzebene auf dem Hilfsträger k bei dem OFDM-Symbol l von der Empfangsantenne $p_R$ ist,
- $g_l(\lambda)$ die OFDM-symbolabhängige reelle Verstärkung ist,
- N die Anzahl von Strömen ist,
- $\tilde{H}_k(P_R,\lambda)$ die komplexen effektiven Kanalkoeffizienten zwischen dem Strom $\lambda$ und der Empfangsantenne $P_R$ sind und
- $\alpha_{l,k}(\lambda)$ im Falle der ersten Iterationseinrichtung das Pilotsymbol des Stromes $\lambda$ auf dem Hilfsträger k bei dem OFDM-Symbol l und im Falle der zweiten Iterationseinrichtung das Pilot- und/oder das Datensymbol des Stromes $\lambda$ auf dem Hilfsträger k bei dem OFDM-Symbol l ist.

7. Messvorrichtung nach einem der Ansprüche 1 bis 6,
   **dadurch gekennzeichnet,**
   **dass** die Verarbeitungseinrichtung (11, 12, 13) eine Fehlervektorgrößen-Detektiereinrichtung (36) zum Berechnen einer Fehlervektorgröße des Messsignals auf der Grundlage der zweiten Parameter des aus dem Messsignal abgeleiteten Signals umfasst.

8. Messvorrichtung nach einem der Ansprüche 1 bis 7,
   **dadurch gekennzeichnet,**
   **dass** das Messsignal aus einem ersten Signal und einem zweiten Signal gebildet ist, die individuelle Antennensignale eines WLAN-802.11n- oder -802.22ac-OFDM-Signals sind, und dass gleichzeitig nicht identische Pilotsignale in dem ersten Signal und dem zweiten Signal vorhanden sind.

9. Messsystem, umfassend eine Messvorrichtung (1) nach einem der Ansprüche 1 bis 8 und eine Kopplungseinrichtung (5) zur Erzeugung des Messsignals durch Addieren eines ersten Signals und eines zweiten Signals.

10. Messverfahren zum Messen eines Messsignals, umfassend bekannte Pilotsignale und unbekannte Datensymbole, wobei erste Parameter eines aus dem Messsignal abgeleiteten Signals iterativ auf der Grundlage der Pilotsignale abgeleitet werden,
    wobei die Datensymbole auf der Grundlage der ersten Parameter bestimmt werden,
    wobei zweite Parameter des aus dem Messsignal abgeleiteten Signals auf der Grundlage der bekannten Pilotsymbole und der bestimmten Datensymbole bestimmt werden,
    **dadurch gekennzeichnet,**
    **dass** die ersten Parameter die Verstärkung, Kanalparameter und eine oder mehrere von einem Trägerfrequenzversatz und/oder Abtastfrequenzversatz und/oder Phasenrauschen sind und die zweiten Parameter ein Trägerfrequenzversatz und/oder Abtastfrequenzversatz und/oder Phasenrauschen und/oder eine Verstärkung und/oder Kanalparameter sind,
    **dass** der Trägerfrequenzversatz und/oder der Abtastfrequenzversatz und/oder das Phasenrauschen der ersten Parameter auf der Grundlage von anfänglichen Startwerten in einer ersten Iteration gemeinsam geschätzt werden,
    **dass** die Verstärkung der ersten Parameter auf der Grundlage des geschätzten Trägerfrequenzversatzes und/oder Abtastfrequenzversatzes und/oder Phasenrauschens geschätzt wird,
    **dass** die Kanalparameter der ersten Parameter auf der Grundlage des Trägerfrequenzversatzes und/oder des Abtastfrequenzversatzes und/oder des Phasenrauschens und der Verstärkung geschätzt werden

und **dass** der Trägerfrequenzversatz und/oder der Abtastfrequenzversatz und/oder das Phasenrauschen der ersten Parameter auf der Grundlage der geschätzten Verstärkung und Kanalparameter der ersten Parameter in weiteren Iterationen geschätzt werden.

11. Messverfahren nach Anspruch 10,
**dadurch gekennzeichnet,**
**dass** die ersten Parameter und/oder die zweiten Parameter unter Heranziehung einer Kosten-Funktion

$$L_{l,k} = \left| r_{l,k}(p_R) \right|^2 - 2 \cdot \mathrm{Re}\left\{ r_{l,k}(p_R) \cdot \exp(-\mathrm{j}\,\Phi) \cdot \left( \sum_{\lambda=0}^{N-1} g_l(\lambda) \cdot \tilde{H}_k(p_R, \lambda) \cdot a_{l,k}(\lambda) \right)^{\!\bullet} \right\}$$

$$+ \left| \exp(\mathrm{j}\,\Phi) \cdot \left( \sum_{\lambda=0}^{N-1} g_l(\lambda) \cdot \tilde{H}_k(p_R, \lambda) \cdot a_{l,k}(\lambda) \right) \right|^2$$

bestimmt werden, worin

- $L_{l,k}$ die berechnete Kosten-Funktion auf einem Hilfsträger k bei einem OFDM-Symbol l ist,
- $r_{l,k}(p_R)$ ein empfangenes Symbol in der Frequenzebene auf dem Hilfsträger k bei dem OFDM-Symbol l von der Empfangsantenne $P_R$ ist,
- $g_l(\lambda)$ die OFDM-symbolabhängige reelle Verstärkung ist,
- $\tilde{H}_k(P_R, \lambda)$ die komplexen effektiven Kanalkoeffizienten zwischen dem Strom $\lambda$ und der Empfangsantenne $P_R$ sind,
- N die Anzahl von Strömen ist,
- $\alpha_{l,k}(\lambda)$ im Falle der ersten Iterationseinrichtung das Pilotsymbol des Stromes $\lambda$ auf dem Hilfsträger k bei dem OFDM-Symbol l und im Falle der zweiten Iterationseinrichtung das Pilot- und/oder das Datensymbol des Stromes $\lambda$ auf dem Hilfsträger k bei dem OFDM-Symbol l ist und
- $\Phi$ die Phase des Messsignals ist.

12. Messverfahren nach Anspruch 10 oder 11,
**dadurch gekennzeichnet,**
**dass** der Trägerfrequenzversatz und/oder der Abtastfrequenzversatz und/oder das Phasenrauschen der zweiten Parameter auf der Grundlage des Frequenzversatzes und/oder des Abtastfrequenzversatzes und/oder des Phasenrauschens und/oder der Verstärkung und/oder der Kanalparameter der geschätzten ersten Parameter und der bestimmten Datensymbole gemeinsam geschätzt werden
und/oder dass eine Verstärkung der zweiten Parameter auf der Grundlage des Frequenzversatzes und/oder des Abtastfrequenzversatzes und/oder des Phasenrauschens der zweiten Parameter geschätzt wird
und/oder dass die Kanalparameter der zweiten Parameter auf der Grundlage des Frequenzversatzes und/oder des Abtastfrequenzversatzes und/oder des Phasenrauschens und/oder der Verstärkung der zweiten Parameter geschätzt werden
und/oder dass der Trägerfrequenzversatz und/oder der Abtastfrequenzversatz und/oder das Phasenrauschen der zweiten Parameter auf der Grundlage der geschätzten Verstärkung und/oder Kanalparameter der zweiten Parameter in weiteren Iterationen geschätzt werden.

13. Messverfahren nach Anspruch 12,
**dadurch gekennzeichnet,**
**dass** der Kanalfrequenzversatz und/oder der Abtastfrequenzversatz und/oder das Phasenrauschen bestimmt werden, indem eine Kosten-Funktion L mit der Phase $\Phi$ abgeleitet wird und deren Differential auf Null gesetzt wird, was zu der folgenden Gleichung führt:

$$\frac{d}{d\,\Phi}L = \sum_k \sum_l \frac{d}{d\,\Phi}L_{l,k} = \sum_k \sum_l 2 \cdot \mathrm{Re}\left\{ \underbrace{r_{l,k}(p_R) \cdot \left( \sum_{\lambda=0}^{N-1} g_l(\lambda) \cdot \tilde{H}_k(p_R,\lambda) \cdot a_{l,k}(\lambda) \right)^{\bullet}}_{= F_{l,k}} \cdot j \cdot \exp(-j\,\Phi) \right\} \equiv 0$$

worin

- $L_{l,k}$ die berechnete Kosten-Funktion auf einem Hilfsträger k bei einem OFDM-Symbol l ist,
- $r_{l,k}(p_R)$ ein empfangenes Symbol in der Frequenzebene auf dem Hilfsträger k bei dem OFDM-Symbol l von der Empfangsantenne $p_R$ ist,
- $g_l(\lambda)$ die OFDM-symbolabhängige reelle Verstärkung ist,
- $F_{l,k}$ gleich dem Term in der Klammer ist,
- N die Anzahl von Strömen ist,
- $\tilde{H}_k(P_R, \lambda)$ die komplexen effektiven Kanalkoeffizienten zwischen dem Strom $\lambda$ und der Empfangsantenne $P_R$ sind und
- $\alpha_{l,k}(\lambda)$ im Falle der ersten Iterationseinrichtung das Pilotsymbol des Stromes $\lambda$ auf dem Hilfsträger k bei dem OFDM-Symbol l und im Falle der zweiten Iterationseinrichtung das Pilot- und/oder das Datensymbol des Stromes $\lambda$ auf dem Hilfsträger k bei dem OFDM-Symbol l ist.

14. Messverfahren nach Anspruch 12 oder 13,
**dadurch gekennzeichnet,**
**dass** die Verstärkung durch Ableiten einer Kosten-Funktion L mit $g_l(\lambda_i)$ bestimmt und auf Null gesetzt wird, was zu der folgenden Gleichung führt:

$$\frac{d}{d\,g_l(\lambda_i)}L = \sum_k \sum_l \frac{d}{d\,g_l(\lambda_i)}L_{l,k}$$

$$= \sum_k \sum_l -2 \cdot \mathrm{Re}\left\{ r_{l,k}(p_R) \cdot \exp(-j\,\Phi) \cdot \tilde{H}_k^{\bullet}(p_R,\lambda) \cdot a_{l,k}^{\bullet}(\lambda_i) \right\}$$

$$+ \sum_k \sum_l 2 \cdot \mathrm{Re}\left\{ \left( \sum_{\lambda=0}^{N-1} g_l(\lambda) \cdot \tilde{H}_k(p_R,\lambda) \cdot a_{l,k}(\lambda) \right) \cdot \tilde{H}_k^{\bullet}(p_R,\lambda) \cdot a_{l,k}^{\bullet}(\lambda_i) \right\} \equiv 0$$

worin

- $L_{l,k}$ die berechnete Kosten-Funktion auf einem Hilfsträger k bei einem OFDM-Symbol l ist,
- $r_{l,k}(p_R)$ ein empfangenes Symbol in der Frequenzebene auf dem Hilfsträger k bei dem OFDM-Symbol l von der Empfangsantenne $p_R$ ist,
- $g_l(\lambda)$ die OFDM-symbolabhängige reelle Verstärkung ist,
- N die Anzahl von Strömen ist,
- $\tilde{H}_k(P_R,\lambda)$ die komplexen effektiven Kanalkoeffizienten zwischen dem Strom $\lambda$ und der Empfangsantenne $P_R$ sind,
- $\alpha_{l,k}(\lambda)$ im Falle der ersten Iterationseinrichtung das Pilotsymbol des Stromes $\lambda$ auf dem Hilfsträger k bei dem OFDM-Symbol l und im Falle der zweiten Iterationseinrichtung das Pilot- und/oder das Datensymbol des Stromes $\lambda$ auf dem Hilfsträger k bei dem OFDM-Symbol l ist und
- $\Phi$ die Phase des Messsignals ist.

15. Messverfahren nach einem der Ansprüche 12 bis 14,
**dadurch gekennzeichnet,**
**dass** die Kanalparameter durch Ableiten einer Kosten-Funktion mit $\tilde{H}_k(P_R,\lambda_i)$ bestimmt werden und dass die Funktion auf Null gesetzt wird, was zu der folgenden Gleichung führt:

$$\frac{d}{d\,\tilde{H}_k(p_R,\lambda_i)}L = \sum_k \sum_l \frac{d}{d\,\tilde{H}_k(p_R,\lambda_i)}L_{l,k}$$

$$= \sum_k \sum_l -2\cdot \mathrm{Re}\left\{r_{l,k}(p_R)\cdot \exp(-\mathrm{j}\,\Phi)\cdot g_l^*(\lambda_i)\cdot a_{l,k}^{\,*}(\lambda_i)\right\}$$

$$+ \sum_k \sum_l 2\cdot \mathrm{Re}\left\{\left(\sum_{\lambda=0}^{N-1} g_l(\lambda)\cdot \tilde{H}_k(p_R,\lambda)\cdot a_{l,k}(\lambda)\right)\cdot g_l^*(\lambda_i)\cdot a_{l,k}^{\,*}(\lambda_i)\right\} \equiv 0$$

,

worin

- $L_{l,k}$ die berechnete Kosten-Funktion auf einem Hilfsträger k bei einem OFDM-Symbol l ist,
- $r_{l,k}(p_R)$ ein empfangenes Symbol in der Frequenzebene auf dem Hilfsträger k bei dem OFDM-Symbol l von der Empfangsantenne $p_R$ ist,
- $g_l(\lambda)$ die OFDM-symbolabhängige reelle Verstärkung ist,
- $\tilde{H}_k(P_R,\lambda)$ die komplexen effektiven Kanalkoeffizienten zwischen dem Strom $\lambda$ und der Empfangsantenne $P_R$ sind,
- $\alpha_{l,k}(\lambda)$ im Falle der ersten Iterationseinrichtung das Pilotsymbol des Stromes $\lambda$ auf dem Hilfsträger k bei dem OFDM-Symbol l und im Falle der zweiten Iterationseinrichtung das Pilot- und/oder das Datensymbol des Stromes $\lambda$ auf dem Hilfsträger k bei dem OFDM-Symbol l ist und
- $\Phi$ die Phase des Messsignals ist.

16. Messverfahren nach einem der Ansprüche 10 bis 15, **dadurch gekennzeichnet, dass** eine Fehlervektorgröße des Messsignals auf der Grundlage der zweiten Parameter berechnet wird.

17. Messverfahren nach einem der Ansprüche 10 bis 16, **dadurch gekennzeichnet, dass** das Messsignal aus einem ersten Signal und einem zweiten Signal gebildet wird, die individuelle Antennensignale eines WLAN-802.11n- oder -802.11ac-OFDM-Signals sind, und dass gleichzeitig nicht identische Pilotsignale in dem ersten Signal und dem zweiten Signal vorhanden sind.

18. Computerprogramm mit Programmcodemitteln zum Ausführen sämtlicher Schritte nach einem der Ansprüche 10 bis 17, falls das Programm in einem Computer oder einem digitalen Signalprozessor ausgeführt wird.

19. Computerprogrammprodukt, welches ein mittels eines Computers lesbares Medium mit gespeicherten Programmcodemitteln zum Ausführen sämtlicher Schritte nach einem der Ansprüche 10 bis 17 aufweist, falls das Programm in einem Computer oder einem digitalen Signalprozessor ausgeführt wird.

**Revendications**

1. Dispositif de mesure pour mesurer un signal de mesure, comportant un moyen de réception (10) pour recevoir le signal de mesure et un moyen de traitement (11, 12, 13), dans lequel le signal de mesure comporte des symboles pilotes connus et des symboles de données inconnus, dans lequel le moyen de traitement (11, 12, 13) comporte

   - un premier moyen d'itération (27) pour déterminer de façon itérative des premiers paramètres d'un signal dérivé du signal de mesure en fonction des symboles pilotes,
   - un moyen de décision de symbole (26) pour déterminer les symboles de données en fonction des premiers paramètres déterminés par le premier moyen d'itération,

   dans lequel le moyen de traitement (11, 12, 13) comporte en outre un second moyen d'itération (37) pour déterminer de façon itérative des seconds paramètres du signal dérivé du signal de mesure en fonction des symboles pilotes connus et des symboles de données déterminés, **caractérisé en ce que**

les premiers paramètres sont un gain, des paramètres de canal et un ou plusieurs d'un décalage de fréquence porteuse et/ou d'un décalage de fréquence échantillon et/ou d'un bruit de phase et les seconds paramètres sont un décalage de fréquence porteuse et/ou un décalage de fréquence échantillon et/ou un bruit de phase et/ou un gain et/ou des paramètres de canal,

le premier moyen d'itération (27) comprend

un premier moyen d'estimation de paramètre (21) pour estimer de façon conjointe le décalage de fréquence porteuse et/ou le décalage de fréquence échantillon et/ou le bruit de phase en fonction de valeurs de départ initial dans une première itération,

- un premier moyen d'estimation de gain (22) pour estimer le gain en fonction des résultats du premier moyen d'estimation de paramètre (21), et
- un premier moyen d'estimation de canal (23) pour estimer les paramètres de canal en fonction des résultats du premier moyen d'estimation de paramètre (21) et du premier moyen d'estimation de gain (22), et

dans lequel le premier moyen d'estimation de paramètre (21) est configuré pour utiliser les résultats du premier moyen d'estimation de gain (22) et du premier moyen d'estimation de canal (23) dans d'autres itérations.

2. Dispositif de mesure selon la revendication 1, **caractérisé en ce que**
le premier moyen d'itération (27) et/ou le second moyen d'itération (37) sont configurés pour déterminer les premiers paramètres et/ou les seconds paramètres en utilisant une fonction de coût

$$L_{l,k} = \left| r_{l,k}(p_R) \right|^2 - 2 \cdot \mathrm{Re}\left\{ r_{l,k}(p_R) \cdot \exp(-j\Phi) \cdot \left( \sum_{\lambda=0}^{N-1} g_l(\lambda) \cdot \widetilde{H}_k(p_R, \lambda) \cdot a_{l,k}(\lambda) \right)^* \right\} +$$

$$\left| \exp(j\Phi) \cdot \left( \sum_{\lambda=0}^{N-1} g_l(\lambda) \cdot \widetilde{H}_k(p_R, \lambda) \cdot a_{l,k}(\lambda) \right) \right|^2$$

dans laquelle

- $L_{l,k}$ est la fonction de coût calculé sur une sous-porteuse $k$ au symbole OFDM $l$,
- $r_{l,k}(p_R)$ est un symbole reçu dans le domaine fréquentiel sur la sous-porteuse $k$ au symbole OFDM $l$ de l'antenne de réception $p_R$,
$g_l(\lambda)$
- est le gain réel dépendant du symbole OFDM,
- $\widetilde{H}_k(p_R, \lambda)$ sont les coefficients de canal effectif complexes entre le flux $\lambda$ et l'antenne de réception $p_R$,
- N est le nombre de flux,
- $\alpha_{l,k}(\lambda)$ est, dans le cas du premier moyen d'itération, le symbole pilote du flux $\lambda$ sur la sous-porteuse $k$ au symbole OFDM $l$ et, dans le cas du second moyen d'itération, le symbole pilote et/ou le symbole de données du flux $\lambda$ sur la sous-porteuse $k$ au symbole OFDM $l$, et
- $\Phi$ est la phase du signal de mesure.

3. Dispositif de mesure selon la revendication 1 ou 2,
**caractérisé en ce que**
le second moyen d'itération (37) comprend

- un second moyen d'estimation de paramètre (31) pour estimer conjointement un décalage de fréquence porteuse et/ou un décalage de fréquence échantillon et/ou un bruit de phase en fonction des résultats du premier moyen d'itération (27) et des symboles de données déterminés,
- un second moyen d'estimation de gain (32) pour estimer un gain en fonction des résultats du second moyen de d'estimation de paramètre (31), et
- un second moyen d'estimation de canal (33) pour estimer des paramètres de canal en fonction des résultats du second moyen d'estimation de paramètre (31) et du second moyen d'estimation de gain (32), et

dans lequel le second moyen d'estimation de paramètre (31) est configuré pour utiliser les résultats du second moyen d'estimation de gain (32) et du second moyen d'estimation de canal (33) dans d'autres itérations.

4. Dispositif de mesure selon la revendication 3,
   **caractérisé en ce que**
   le premier moyen d'estimation de paramètre (21) et le second moyen d'estimation de paramètre (31) sont configurés pour estimer conjointement le décalage de fréquence porteuse et/ou le décalage de fréquence échantillon et/ou le bruit de phase en dérivant une fonction de coût L avec une phase $\Phi$ et fixer son différentiel de $\Phi$ à zéro en résultat de l'équation suivante:

$$\frac{d}{d\Phi}L = \sum_k \sum_l \frac{d}{d\Phi}L_{l,k} = \sum_k \sum_l 2 \cdot \mathrm{Re}\left\{ \underbrace{r_{l,k}(p_R) \cdot \left(\sum_{\lambda=0}^{N-1} g_l(\lambda) \cdot \tilde{H}_k(p_R,\lambda) \cdot a_{l,k}(\lambda)\right)^*}_{=F_{l,k}} \cdot j \cdot \exp(-j\Phi) \right\} = 0$$

dans laquelle

- $L_{l,k}$ est la fonction de coût calculé sur une sous-porteuse k au symbole OFDM *l*,
- $r_{l,k}(p_R)$ est un symbole reçu dans le domaine fréquentiel sur la sous-porteuse *k* au symbole OFDM *l* de l'antenne de réception $p_R$,
- $g_l(\lambda)$ est le gain réel dépendant du symbole OFDM,
- $F_{l,k}$ est égal au terme entre parenthèses,
- N est le nombre de flux,
- $\tilde{H}_k(p_R,\lambda)$ sont les coefficients de canal effectif complexes entre le flux $\lambda$ et l'antenne de réception $p_R$, et
- $\alpha_{l,k}(\lambda)$ est, dans le cas du premier moyen d'itération, le symbole pilote du flux $\lambda$ sur la sous-porteuse *k* au symbole OFDM *l* et, dans le cas du second moyen d'itération, le symbole pilote et/ou le symbole de données du flux $\lambda$ sur la sous-porteuse *k* au symbole OFDM *l*.

5. Dispositif de mesure selon la revendication 3 ou 4,
   **caractérisé en ce que**
   $g_l(\lambda_i)$ le premier moyen d'estimation de gain (22) et le second moyen d'estimation de gain (32) sont configurés pour déterminer le gain en dérivant une fonction de coût L avec et fixer son différentiel de à zéro en résultat de l'équation suivante :

$$\frac{d}{dg_l(\lambda_i)}L = \sum_k \sum_l \frac{d}{dg_l(\lambda_i)}L_{l,k}$$

$$= \sum_k \sum_l -2 \cdot \mathrm{Re}\left\{ r_{l,k}(p_R) \cdot \exp(-j\Phi) \cdot \tilde{H}_k^*(p_R,\lambda) \cdot a_{l,k}^*(\lambda_i) \right\}$$

$$+ \sum_k \sum_l 2 \cdot \mathrm{Re}\left\{ \left(\sum_{\lambda=0}^{N-1} g_l(\lambda) \cdot \tilde{H}_k(p_R,\lambda) \cdot a_{l,k}(\lambda)\right) \cdot \tilde{H}_k^*(p_R,\lambda) \cdot a_{l,k}^*(\lambda_i) \right\} \equiv 0$$

dans laquelle

- $L_{l,k}$ est la fonction de coût calculé sur une sous-porteuse *k* au symbole OFDM *l*,

- $r_{l,k}(p_R)$ est un symbole reçu dans le domaine fréquentiel sur la sous-porteuse $k$ au symbole OFDM $l$ de l'antenne de réception $p_R$,
- $g_l(\lambda)$ est le gain réel dépendant du symbole OFDM,
- N est le nombre de flux,
- $\tilde{H}_k(p_R, \lambda)$ sont les coefficients de canal effectif complexes entre le flux $\lambda$ et l'antenne de réception $p_R$,
- $a_{l,k}(\lambda)$ est, dans le cas du premier moyen d'itération, le symbole pilote du flux $\lambda$ sur la sous-porteuse $k$ au symbole OFDM $l$ et, dans le cas du second moyen d'itération, le symbole pilote et/ou le symbole de données du flux $\lambda$ sur la sous-porteuse $k$ au symbole OFDM $l$, et
- $\Phi$ est la phase du signal de mesure.

6.  Dispositif de mesure selon l'une quelconque des revendications 3 à 5,
    **caractérisé en ce que**
    le premier moyen d'estimation de canal (23) et le second moyen d'estimation de canal (33) sont configurés pour déterminer les paramètres de canal dérivant une fonction de coût L avec $\tilde{H}_k(p_R, \lambda_i)$ et fixant son différentiel de $\tilde{H}_k(p_R, \lambda_i)$ à zéro en résultat de l'équation suivante :

$$\frac{d}{d\tilde{H}_k(p_R, \lambda_i)} L = \sum_k \sum_l \frac{d}{d\tilde{H}_k(p_R, \lambda_i)} L_{l,k}$$

$$= \sum_k \sum_l -2 \cdot \operatorname{Re}\left\{ r_{l,k}(p_R) \cdot \exp(-j\Phi) \cdot g_l^*(\lambda_i) \cdot a_{l,k}^{\ *}(\lambda_i) \right\}$$

$$+ \sum_k \sum_l 2 \cdot \operatorname{Re}\left\{ \left( \sum_{\lambda=0}^{N-1} g_l(\lambda) \cdot \tilde{H}_k(p_R, \lambda) \cdot a_{l,k}(\lambda) \right) \cdot g_l^*(\lambda_i) \cdot a_{l,k}^{\ *}(\lambda_i) \right\} \equiv 0$$

dans laquelle

- $L_{l,k}$ est la fonction de coût calculé sur une sous-porteuse $k$ au symbole OFDM $l$ ,
- $r_{l,k}(p_R)$ est un symbole reçu dans le domaine fréquentiel sur la sous-porteuse $k$ au symbole OFDM $l$ de l'antenne de réception $p_R$,
- $g_l(\lambda)$ est le gain réel dépendant du symbole OFDM,
- N est le nombre de flux,
- $\tilde{H}_k(p_R, \lambda)$ sont les coefficients de canal effectif complexes entre le flux $\lambda$ et l'antenne de réception $p_R$, et
- $a_{l,k}(\lambda)$ est, dans le cas du premier moyen d'itération, le symbole pilote du flux $\lambda$ sur la sous-porteuse $k$ au symbole OFDM $l$ et, dans le cas du second moyen d'itération, le symbole pilote et/ou le symbole de données du flux $\lambda$ sur la sous-porteuse $k$ au symbole OFDM $l$.

7.  Dispositif de mesure selon l'une quelconque des revendications 1 à 6,
    **caractérisé en ce que**
    le moyen de traitement (11, 12, 13) comprend un moyen de détection d'amplitude de vecteur d'erreur (36) pour calculer une amplitude de vecteur d'erreur du signal de mesure en fonction des seconds paramètres du signal dérivé du signal de mesure.

8.  Dispositif de mesure selon l'une quelconque des revendications 1 à 7,
    **caractérisé en ce que**
    le signal de mesure est constitué d'un premier signal et d'un second signal, qui sont des signaux d'antenne individuels d'un signal WLAN 802.11n ou d'un signal OFDM 802.11ac, et
    des symboles pilotes non identiques simultanés sont présents dans le premier signal et le second signal.

9.  Système de mesure comportant un dispositif de mesure (1) selon l'une quelconque des revendications 1 à 8 et un moyen de couplage (5) pour créer le signal de mesure en ajoutant un premier signal et un second signal.

10. Procédé de mesure pour mesurer un signal de mesure comprenant des symboles pilotes connus et des symboles de données inconnus,
dans lequel des premiers paramètres d'un signal dérivé du signal de mesure sont dérivés de façon itérative en fonction des symboles pilotes,
dans lequel les symboles de données sont déterminés en fonction des premiers paramètres,
dans lequel les seconds paramètres du signal dérivé du signal de mesure sont déterminés en fonction des symboles pilotes connus et des symboles de données déterminés,
**caractérisé en ce que**
les premiers paramètres sont un gain, des paramètres de canal et un ou plusieurs d'un décalage de fréquence porteuse et/ou d'un décalage de fréquence échantillon et/ou d'un bruit de phase et les seconds paramètres sont un décalage de fréquence porteuse et/ou un décalage de fréquence échantillon et/ou un bruit de phase et/ou un gain et/ou des paramètres de canal,
le décalage de fréquence porteuse et/ou le décalage de fréquence échantillon et/ou le bruit de phase des premiers paramètres sont estimés conjointement en fonction de valeurs de départ initiales dans une première itération, et
le gain des premiers paramètres est estimé en fonction du décalage de fréquence porteuse et/ou du décalage de fréquence échantillon et/ou du bruit de phase estimés, et
les paramètres de canal des premiers paramètres sont estimés en fonction du décalage de fréquence porteuse et/ou du décalage de fréquence échantillon et/ou du bruit de phase et du gain, et le décalage de fréquence porteuse et/ou le décalage de fréquence échantillon et/ou le bruit de phase des premiers paramètres sont estimés en fonction du gain et des paramètres de canal estimés des premiers paramètres dans d'autres itérations.

11. Procédé de mesure selon la revendication 10, **caractérisé en ce que**
les premiers paramètres et/ou les seconds paramètres sont déterminés en utilisant une fonction de coût

$$L_{l,k} = \left| r_{l,k}(p_R) \right|^2 - 2 \cdot \mathrm{Re}\left\{ r_{l,k}(p_R) \cdot \exp(-j\Phi) \cdot \left( \sum_{\lambda=0}^{N-1} g_l(\lambda) \cdot \widetilde{H}_k(p_R, \lambda) \cdot a_{l,k}(\lambda) \right)^* \right\} +$$

$$\left| \exp(j\Phi) \cdot \left( \sum_{\lambda=0}^{N-1} g_l(\lambda) \cdot \widetilde{H}_k(p_R, \lambda) \cdot a_{l,k}(\lambda) \right) \right|^2$$

dans laquelle

- $L_{l,k}$ est la fonction de coût calculé sur une sous-porteuse $k$ au symbole OFDM $l$,
- $r_{l,k}(p_R)$ est un symbole reçu dans le domaine fréquentiel sur la sous-porteuse $k$ au symbole OFDM $l$ de l'antenne de réception $p_R$,
- $g_l(\lambda)$ est le gain réel dépendant du symbole OFDM,
- $\widetilde{H}_k(p_R, \lambda)$ sont les coefficients de canal effectif complexes entre le flux $\lambda$ et l'antenne de réception $p_R$,
- N est le nombre de flux,
- $a_{l,k}(\lambda)$ est, dans le cas du premier moyen d'itération, le symbole pilote du flux $\lambda$ sur la sous-porteuse $k$ au symbole OFDM $l$ et, dans le cas du second moyen d'itération, le symbole pilote et/ou le symbole de données du flux $\lambda$ sur la sous-porteuse $k$ au symbole OFDM $l$, et
- $\Phi$ est la phase du signal de mesure.

12. Procédé de mesure selon la revendication 10 ou 11,
**caractérisé en ce que**
le décalage de fréquence porteuse et/ou le décalage de fréquence échantillon et/ou le bruit de phase des seconds paramètres sont estimés conjointement en fonction du décalage de fréquence et/ou du décalage de fréquence échantillon et/ou du bruit de phase et/ou du gain et/ou des paramètres de canal des premiers paramètres estimés et des symboles de données déterminés, et/ou
un gain des seconds paramètres est estimé en fonction du décalage de fréquence et/ou du décalage de fréquence échantillon et/ou du bruit de phase des seconds paramètres, et/ou
les paramètres de canal des seconds paramètres sont estimés en fonction du décalage de fréquence et/ou du décalage de fréquence échantillon et/ou du bruit de phase et/ou du gain des seconds paramètres, et/ou

**EP 2 846 504 B1**

le décalage de fréquence porteuse et/ou le décalage de fréquence échantillon et/ou le bruit de phase des seconds paramètres sont estimés en fonction du gain et/ou des paramètres de canal estimés des seconds paramètres dans d'autres itérations.

**13.** Procédé de mesure selon la revendication 12,
**caractérisé en ce que**
le décalage de fréquence de canal et/ou le décalage de fréquence échantillon et/ou le bruit de phase sont déterminées en dérivant une fonction de coût L avec la phase Φ et en fixant son différentiel à zéro en résultat de l'équation suivante :

$$\frac{d}{d\Phi}L = \sum_k\sum_l\frac{d}{d\Phi}L_{l,k} = \sum_k\sum_l 2\cdot\mathrm{Re}\left\{\underbrace{r_{l,k}(p_R)\cdot\left(\sum_{\lambda=0}^{N-1}g_l(\lambda)\cdot\tilde{H}_k(p_R,\lambda)\cdot a_{l,k}(\lambda)\right)^*}_{=F_{l,k}}\cdot j\cdot\exp(-j\Phi)\right\} = 0$$

dans laquelle

- $L_{l,k}$ est la fonction de coût calculé sur une sous-porteuse $k$ au symbole OFDM $l$,
- $r_{l,k}(p_R)$ est un symbole reçu dans le domaine fréquentiel sur la sous-porteuse $k$ au symbole OFDM $l$ de l'antenne de réception $p_R$,
- $g_l(\lambda)$ est le gain réel dépendant du symbole OFDM,
- $F_{l,k}$ est égal au terme entre parenthèses,
- N est le nombre de flux,
- $\tilde{H}_k(p_R,\lambda)$ sont les coefficients de canal effectif complexes $a_{l,k}(\lambda)$

entre le flux $\lambda$ et l'antenne de réception $p_R$, et

- est, dans le cas du premier moyen d'itération, le symbole pilote du flux $\lambda$ sur la sous-porteuse $k$ au symbole OFDM $l$ et, dans le cas du second moyen d'itération, le symbole pilote et/ou le symbole de données du flux $\lambda$ sur la sous-porteuxe $k$ au symbole OFDM $l$.

**14.** Procédé de mesure selon la revendication de 12 ou 13,
**caractérisé en ce que**
le gain est déterminé en dérivant une fonction de coût L avec $g_l(\lambda_i)$ et en le fixant à zéro en résultat de l'équation suivante :

$$\frac{d}{dg_l(\lambda_i)}L = \sum_k\sum_l\frac{d}{dg_l(\lambda_i)}L_{l,k}$$

$$= \sum_k\sum_l -2\cdot\mathrm{Re}\left\{r_{l,k}(p_R)\cdot\exp(-j\Phi)\cdot\tilde{H}_k^*(p_R,\lambda)\cdot a_{l,k}^*(\lambda_i)\right\}$$

$$+ \sum_k\sum_l 2\cdot\mathrm{Re}\left\{\left(\sum_{\lambda=0}^{N-1}g_l(\lambda)\cdot\tilde{H}_k(p_R,\lambda)\cdot a_{l,k}(\lambda)\right)\cdot\tilde{H}_k^*(p_R,\lambda)\cdot a_{l,k}^*(\lambda_i)\right\} \equiv 0$$

dans laquelle

- $L_{l,k}$ est la fonction de coût calculé sur une sous-porteuse $k$ au symbole OFDM $l$,
- $r_{l,k}(p_R)$ est un symbole reçu dans le domaine fréquentiel sur la sous-porteuse $k$ au symbole OFDM $l$ de l'antenne

36

de réception $p_R$,
- $g_l(\lambda)$ est le gain réel dépendant du symbole OFDM,
- N est le nombre de flux,
- $\tilde{H}_k(p_R,\lambda)$ sont les coefficients de canal effectif complexes $a_{l,k}(\lambda)$

entre le flux $\lambda$ et l'antenne de réception $p_R$,

- est, dans le cas du premier moyen d'itération, le symbole pilote du flux $\lambda$ sur la sous-porteuse $k$ au symbole OFDM $l$ et, dans le cas du second moyen d'itération, le symbole pilote et/ou le symbole de données du flux $\lambda$ sur la sous-porteuse $k$ au symbole OFDM $l$, et
- $\Phi$ est la phase du signal de mesure.

**15.** Procédé de mesure selon l'une quelconque des revendications 12 à 14,
**caractérisé en ce que**
les paramètres de canal sont déterminés en dérivant une fonction de coût avec $\tilde{H}_k(p_R,\lambda_i)$ et en la fixant à zéro en résultat de l'équation suivante :

$$\frac{d}{d\tilde{H}_k(p_R,\lambda_i)}L = \sum_k \sum_l \frac{d}{d\tilde{H}_k(p_R,\lambda_i)}L_{l,k}$$

$$= \sum_k \sum_l -2 \cdot \mathrm{Re}\left\{ r_{l,k}(p_R) \cdot \exp(-j\Phi) \cdot g_l^*(\lambda_i) \cdot a_{l,k}^*(\lambda_i) \right\}$$

$$+ \sum_k \sum_l 2 \cdot \mathrm{Re}\left\{ \left( \sum_{\lambda=0}^{N-1} g_l(\lambda) \cdot \tilde{H}_k(p_R,\lambda) \cdot a_{l,k}(\lambda) \right) \cdot g_l^*(\lambda_i) \cdot a_{l,k}^*(\lambda_i) \right\} \equiv 0$$

dans laquelle

- $L_{l,k}$ est la fonction de coût calculé sur une sous-porteuse $k$ au symbole OFDM $l$,
- $r_{l,k}(p_R)$ est un symbole reçu dans le domaine fréquentiel sur la sous-porteuse $k$ au symbole OFDM $l$ de l'antenne de réception $p_R$,
- $g_l(\lambda)$ est le gain réel dépendant du symbole OFDM,
- $\tilde{H}_k(p_R,\lambda)$ sont les coefficients de canal effectif complexes entre le flux $\lambda$ et l'antenne de réception $p_R$, $a_{l,k}(\lambda)$
- est, dans le cas du premier moyen d'itération, le symbole pilote du flux $\lambda$ sur la sous-porteuse $k$ au symbole OFDM $l$ et, dans le cas du second moyen d'itération, le pilote et/ou le symbole de données du flux $\lambda$ sur la sous-porteuse $k$ au symbole OFDM $l$, et
- $\Phi$ est la phase du signal de mesure.

**16.** Procédé de mesure selon l'une quelconque des revendications 10 à 15,
**caractérisé en ce que**
une amplitude de vecteur d'erreur du signal de mesure est calculée en fonction des seconds paramètres.

**17.** Procédé de mesure selon l'une quelconque des revendications 10 à 16,
**caractérisé en ce que**
le signal de mesure est constitué d'un premier signal et d'un second signal, qui sont des signaux d'antenne individuels d'un signal WLAN 802.11n ou d'un signal OFDM 802.11ac, et
des symboles pilotes non identiques simultanés sont présents dans le premier signal et le second signal.

**18.** Programme informatique comportant un moyen de code de programme pour effectuer toutes les étapes selon l'une quelconque des revendications 10 à 17 si le programme est exécuté sur un ordinateur ou sur un processeur de signal numérique.

19. Produit de programme informatique comprenant un support pouvant être lu par un ordinateur comportant un moyen de code de programme mémorisé pour effectuer toutes les étapes selon l'une quelconque des revendications 10 à 17 si le programme est exécuté sur un ordinateur ou un processeur de signal numérique.

**Fig. 1**

Fig. 2

```
┌─────────────────────────────┐
│  Add a first signal and a second signal  │── 100
│  Resulting in a measuring signal         │
└─────────────────────────────┘
              │
              ▼
┌─────────────────────────────┐
│  Receive measuring signal                │── 101
└─────────────────────────────┘
              │
              ▼
┌─────────────────────────────┐
│  Estimate CFO, SFO, Phase noise          │── 102
│  based on pilots                         │
└─────────────────────────────┘
              │
              ▼
┌─────────────────────────────┐
│  Estimate gain based on pilots           │── 103
└─────────────────────────────┘
              │
              ▼
┌─────────────────────────────┐
│  Estimate channel based on pilots        │── 104
└─────────────────────────────┘
              │
              ▼
        ◇ Converged? ◇                        ── 105
    no              yes
              │
              ▼
┌─────────────────────────────┐
│  Compensate CFO, SFO, phase noise,       │── 106
│  gain and channel parameters             │
└─────────────────────────────┘
              │
              ▼
┌─────────────────────────────┐
│  Correct distortions                     │── 107
└─────────────────────────────┘
              │
              ▼
┌─────────────────────────────┐
│  Decide data symbols                     │── 108
└─────────────────────────────┘
```

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102011077390 A1
- WO 2008116534 A1
- WO 2008051658 A1

**Non-patent literature cited in the description**

- MIMO-OFDM channel estimation in the presence of carrier frequency-offset. **JUN LI et al.** EMGERGING TECHNOLOGIES: FRONTIERS OF MOBILE AND WIRELESS COMMUNICATION, 2004. PROCEEDINGS OF THE IEEE 6TH CIRCUITS AND SYSTEMS SYMPOSIUM. IEEE, 31 May 2004, vol. 2, 685-688